(19) Europäisches Patentamt / European Patent Office / Office européen des brevets

(11) EP 3 959 290 B1

(12) # EUROPEAN PATENT SPECIFICATION

(45) Date of publication and mention of the grant of the patent:
**22.11.2023 Bulletin 2023/47**

(21) Application number: **20718690.9**

(22) Date of filing: **20.04.2020**

(51) International Patent Classification (IPC):
***C09K 11/06*** *(2006.01)*

(52) Cooperative Patent Classification (CPC):
**C09K 11/06**

(86) International application number:
**PCT/EP2020/060998**

(87) International publication number:
**WO 2020/216717 (29.10.2020 Gazette 2020/44)**

(54) **LUMINESCENT MATERIAL MADE OF A POLYMER-MATRIX COMPRISING LUMINESCENT ORGANIC COMPOUND AND LUMINESCENT METAL CLUSTERS**

LUMINESZIERENDES MATERIAL AUS EINER POLYMERMATRIX MIT LUMINESZIERENDEN ORGANISCHEN VERBINDUNGEN UND LUMINESZIERENDEN METALLCLUSTERN

MATÉRIAU LUMINESCENT CONSTITUÉ D'UNE MATRICE POLYMÈRE COMPRENANT UN COMPOSÉ ORGANIQUE LUMINESCENT ET DES GRAPPES MÉTALLIQUES LUMINESCENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2019 EP 19305523**

(43) Date of publication of application:
**02.03.2022 Bulletin 2022/09**

(73) Proprietors:
- **Université de Rennes**
  **35042 Rennes (FR)**
- **CENTRE NATIONAL DE LA RECHERCHE SCIENTIFIQUE (CNRS)**
  **75016 Paris (FR)**
- **Ecole Nationale Superieure de Chimie de Rennes**
  **35700 Rennes (FR)**
- **Institut National des Sciences Appliquées de Rennes**
  **35708 Rennes Cedex 7 (FR)**

(72) Inventors:
- **SOUMAYA, Khlifi**
  **35510 CESSON SEVIGNE (FR)**
- **MOLARD, Yann**
  **35690 ACIGNE (FR)**
- **ACHARD, Mathieu**
  **35230 ORGERES (FR)**
- **AMELA-CORTES, Maria**
  **35690 ACIGNE (FR)**

(74) Representative: **Plasseraud IP**
**66, rue de la Chaussée d'Antin**
**75440 Paris Cedex 09 (FR)**

(56) References cited:
**EP-A1- 2 754 707** **WO-A1-2007/070115**
**WO-A2-2011/064139**

- **YU-FEI SONG ET AL: "Recent advances on polyoxometalate-based molecular and composite materials", CHEMICAL SOCIETY REVIEWS, vol. 41, no. 22, 1 January 2012 (2012-01-01), page 7384, XP055054444, ISSN: 0306-0012, DOI: 10.1039/c2cs35143a**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a material comprising a polymer matrix, an organic emitter and an inorganic phosphorescent emitter, wherein both emitters are embedded within the polymer matrix. The prior art document WO2011/064139 A2 discloses a compound comprising a M6 based cluster core, wherein M is selected from molybdenum or tungsten and at least one ligand. The compound is used in a polymeric matrix in polymeric matrix flat screens.

Stimuli responsive emissive materials have drawn an increasing attention for their potential in applications like sensors, lightning, optoelectronic or information storage. They are able to react to one or several external stimuli, such as a chemical or vapor exposure, a mechanical or electrical stress, a light irradiation, or a thermal treatment. Light is an easy to use external stimulus and, for this reason, luminescence that is a straightforward responsive signal, is a useful tool that can be integrated in the design of responsive materials offering potential applications in optoelectronic devices, data recording and storage, security and counterfeiting, etc. Stability and reversibility of the material response is in many cases an important issue that needs to be carefully considered to target applications. Materials able to store data for a prescribed period of time are also needed for secure communications. These materials, when rewritable, could help to lower the ecological impact of the traditional paper industry from the production to the recycling.

Although security inks that allow thermal rewriting of invisible printed images have already been described, there is still a need for printable hybrid material able to withstand cost effective and ecofriendly writing-erasing cycles.

The inventors of the present invention had already worked on emissive materials made of a polymer matrix with high content of metal cluster compounds in particular octahedral transition metal cluster compounds, see for instance EP 2 754 706.

The inventors of the present invention have now developed a new dual emissive materials answering to oxygen concentration with the same light stimulus for writing and reading.

More particularly they have developed a new self-erasable material in which the writing and erasing processes are controlled by the dynamic quenching of an energy transfer from an organic emitter and an inorganic phosphorescent emitter by triplet oxygen coming from air. Both emitters are homogeneously embedded in a polymer matrix. When exposed to ultraviolet (UV) light, the hybrid film switches its emission color from white to red depending on the irradiation power, the exposure time and the gas permeability of the polymer host. This switch is governed by the local oxygen concentration that drops down when triplet oxygen $O_2$ reacts with excited triplet states of emitters to generate the reactive singlet oxygen $O_2$. Data are only readable under UV light and can gradually self-erase when the polymer host shows a low gas permeability. The erasure times are controlled by exposure to UV light during the writing processes and can also be thermally accelerated.

Compared to a simple combination of emitters which would always emit the same color, the present technology involves oxygen to tailor the inter-emitters interactions and thus the emission color.

The present invention thus relates to a material as defined in claim 1 comprising a polymer matrix functionalized with:

- an organic compound comprising a moiety of formula

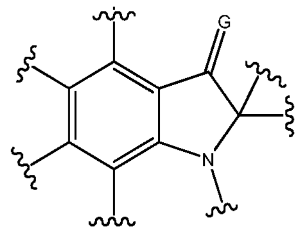

  wherein G is

  - oxygen;
  - sulfur;
  - $NR^a$, $N^{(+)}R^aR^b$ with $R^a$ and $R^b$ are each independently H, $C_1$-$C_{18}$ alkyl, aryl or heteroaryl;
  - CH-(EWG) C-$(EWG)_2$ or $(EWG^1)$-C-$(EWG^2)$ with EWG, $EWG^1$, $EWG^2$ being an electron withdrawing group;
  - preferably oxygen;

- and a metal cluster compound comprising a moiety of formula, an anion of formula $[M_6Q^i_8L^a_6]^{d-}$
  wherein:

- M represents molybdenum (Mo), tungsten (W), rhenium (Re), or a mixture thereof, preferably Mo or W;
- $Q^i$ is an inner ligand and represents a halogen or a chalcogen atom, preferably a halogen atom, or a mixture thereof; and
- $L^a$ is an apical ligand and represents a halogen atom, an organic ligand or a mixture thereof;
- d ranges from -4 to + 4, preferably 2 to 4, more preferably 2.

The present invention also relates to the use of the material for data recording, data storage, anticounterfeiting, sensing, optoelectronics or theranostic applications. In particular the present invention relates to the use of the material in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.

**Definitions:**

In the present invention the expression "a polymer matrix functionalized with" means the organic compound and metal cluster compound can be independently:

- Linked to the polymer matrix by
  - Covalent bond
  - Electrostatic interaction
  - Supramolecular interaction
  - Complexation / adsorption
- and/ or can be dispersed within the polymer matrix (admixture/ embedded)

In one embodiment the organic compound is linked to the polymer matrix by covalent bond.

In another embodiment the organic compound is dispersed with the polymer matrix.

In another embodiment the metal cluster compound is linked to the polymer matrix by covalent bond.

In still another embodiment, the metal cluster compound is linked to the polymer matrix by supramolecular interaction or complexation.

The expression "Electron withdrawing group" or EWG represents any group having an improved electron accepting capacity and electron transferring capacity. The electron withdrawing group is also referred to as an electron attracting group, and refers to an atomic group which draws electrons from surrounding atomic groups by a resonance effect or an inductive effect in electron theory. More particularly this electron withdrawing group (EWG) includes tri-haloalkylsulfonyl group ($-SO_2C(Halogen)_3$), ammonium group ($-NH_3^+$, $-NH(alkyl)_2^+$, $-N(alkyl)_3^+$, $NH(aryl)_2^+$, $-N(aryl)_3^+$, $NH(alkyl)(aryl)^+$nitro group ($-NO_2$), haloformyl group (-CO(Halogen)), formyl group (-CHO), acyl group (-CO(alkyl)), carboxyl group (-COOH), alkoxycarbonyl group (-COO(alkyl)), aminocarbonyl groups ($-CONH_2$, -CONH(alkyl), $-CON(alkyl)_2$), halogroups, nitroso group (-N=O), aryl, heteroaryl (such as pyridinyl, pyridinium, pyrimidinyl, pyrimidinium, indolyl, indolinium, etc) and the like.

The term "halogen" or "halo" as used in the present invention refers to an atom of fluorine (F), chlorine (Cl), bromine (Br), iodine (I), preferably F, Cl, Br or I.

The expression "amino" as used in the present invention refers $-NH_2$, -NH(alkyl) or $-N(alkyl)_2$)The expression "alkyl" represents any monovalent radical of a linear or branched hydrocarbon chain comprising 1 to 18 carbon atoms. The expression "$C_3$-$C_{18}$ alkyl" represents an alkyl group having 3 to 18 carbon atoms. The expression "$C_6$-$C_7$ alkyl" represents an alkyl group having 6 or 7 carbon atoms. Examples of $C_1$-$C_{18}$ alkyl groups include $C_1$-$C_4$ alkyl groups such as methyl, ethyl, *n*-propyl, *i*-propyl, *n*-butyl, *i*-butyl, *s*-butyl or *t*-butyl, $C_6$-$C_8$ alkyl groups such as *n*-hexyl, *n*-heptyl or *n*-octyl, as well as *n*-pentyl, 2-ethylhexyl, 3,5,5-trimethylhexyl, *n*-nonyl, *n*-decyl, *n*-undecyl, *n*-dodecyl or *n*-octadecyl.

The expression "aryl" represents any monovalent radical of an aromatic hydrocarbon comprising 6 to 18 carbon atoms. It represents a polyunsaturated aromatic hydrocarbyl containing one ring (i.e. phenyl), several fused rings (for example naphthyl) or several rings linked via a covalent bond (for example biphenyl), which typically contain 6 to 20, and preferentially 6 to 12, carbon atoms, and wherein at least one ring is aromatic. The aromatic ring may optionally comprise one to two additional fused rings (*i.e.* cycloalkyl, heterocycloalkyl or heteroaryl). Examples of $C_6$-$C_{18}$ aryl groups include phenyl, naphthyl, anthracenyl and phenanthrenyl.

The expression "heteroaryl" represents any monovalent radical of a monocyclic or bicyclic 5 to 10 membered

aromatic group comprising from 1 to 3 heteroatoms independently selected from oxygen, nitrogen, phosphorus and sulfur. Examples of $C_5$-$C_{10}$ heteroaryl groups include furyl, thienyl, pyrrolyl, pyrazoyl, imidazolyl, isoxazolyl, isothiazoyl, thiazolyl, oxazolyl, 1,2,3-triazolyl, 1,2,4-triazolyl, 1-benzofuryl, 1-benzothienyl, indolyl, benzimidazolyl, indazolyl, 1,2-benzisoxazolyl, 2,1-benzisoxazolyl, 1,2-benzisothiazolyl, 2,1-benzisothiazolyl, benzothiazolyl, benzoxazolyl, benzotriazolyl, pyridyl, pyridinium, quinolinyl, quinolinium, isoquinolinyl, isoquinolinium, pyridazinyl, cinnolinyl, phthalazinyl, pyrimidinyl, quinazolinyl, pyrazinyl and quinoxalinyl.

The expression "cycloalkyl" represents any monovalent radical of a monocyclic or bicyclic 3 to 12 membered saturated carbocycle. Examples of $C_3$-$C_{12}$ cycloalkyl groups include cyclopropyl, cyclopentyl and cyclohexyl.

The expression "alkoxy" represents a radical of formula -O$C_1$-$C_{12}$ alkyl. Examples of $C_1$-$C_{12}$ alkoxy groups include $C_1$-$C_6$ alkoxy groups such as $-OCH_3$, - $OCH_2CH_3$ or $-O(CH_2)_5CH_3$.

The expression "haloalkyl" represents any $C_1$-$C_{12}$ alkyl group substituted by one or more halogen atom such as F or Cl. Examples of $C_1$-$C_{12}$ haloalkyl groups include $C_1$-$C_{12}$ perhaloalkyl groups, in particular $C_1$-$C_4$ perhaloalkyl groups such as trifluoromethyl ($-CF_3$), as well as $C_1$-$C_{12}$ (perhaloalkyl)alkyl groups, in particular ($C_1$-$C_4$ perhaloalkyl)-($C_1$-$C_4$ alkyl) groups such as $-CH_2CF_3$.

The expression "haloalkoxy" represents a radical of formula -O$C_1$-$C_{12}$ haloalkyl. Examples of $C_1$-$C_{12}$ haloalkoxy include $C_1$-$C_{12}$ perhaloalkoxy groups, in particular $C_1$-$C_4$ perhaloalkoxy groups such as $-OCF_3$, as well as $C_1$-$C_{12}$ (perhaloalkyl)alkoxy groups, in particular ($C_1$-$C_4$ perhaloalkyl)-($C_1$-$C_4$ alkoxy) groups such as $-OCH_2CF_3$.

The expression "perhaloalkyl"means an alkyl wherein all the hydrogen atoms are replaced by halogen atoms. Examples include trifluoromethyl.

The expression "alkylthio" represents a radical of formula -S$C_1$-$C_{12}$ alkyl. Examples of $C_1$-$C_{12}$ alkylthio groups include $-SCH_3$ and $-SCH_2CH_3$.

The expression "haloalkylthio" represents a radical of formula -S-$C_1$-$C_{12}$ haloalkyl. Examples of $C_1$-$C_{12}$ haloalkoxy groups include $C_1$-$C_{12}$ perhaloalkylthio groups, in particular $C_1$-$C_4$ perhaloalkylthio groups such as $-SCF_3$, as well as $C_1$-$C_{12}$ (perhaloalkyl)alkylthio groups, in particular ($C_1$-$C_4$ perhaloalkyl)-($C_1$-$C_4$ alkylthio) groups such as $-SCH_2CF_3$.

The expression "perhaloalkylthio" means-S-perhaloalkyl.

The expression "alkenyl" or "alcenyl" as used in the present invention is a monovalent group $-C_nH_{2n-1}$ formed from an alkene by removal of one hydrogen atoms from any carbon atom. It is an alkyl containing at least one carbon-carbon double bond. Examples include ethenyl, propenyls, butenyls, allyl, and the like.

The expression"alkynyl" is a univalent aliphatic hydrocarbon radical containing at least one carbon-carbon triple bond. Examples include ethynyl, propynyls, butynyls and the like.

The expression "acrylate group" means $-O-C(=O)-CH=CH_2$.

The expression "methacrylate group" means $-O-C(=O)-C(CH_3)=CH_2$.

The expression "aryloxy" as used in the present invention means Aryl-O-.

The expression "aralkyl" means any univalent radical derived from an alkyl radical by replacing one or more hydrogen atoms by aryl groups.

The expression "pyridinyl" represents any monovalent radical of a pyridine which is an aromatic group comprising 5 carbon atoms and 1 nitrogen atom.

The expression "pyrimidinyl" represents any monovalent radical of a pyrimidine which is an aromatic group comprising 4 carbon atoms and 2 nitrogen atoms.

The expression "indolyl" represents any monovalent radical of an indole, which is a six-membered benzene ring fused to a five-membered nitrogen-containing pyrrole ring.

The expression "linker" is any group connecting two moieties of a compound.

The expression "cycle" is a cyclic ether comprising 12 to 21 ring atoms at least 4 ethylene oxide units and optionally interrupted by one or more nitrogen atoms.

The expression "PEO" is a chain comprising at least 4 ethylene oxide units or chains and optionally interrupted by one or more nitrogen atoms.

The expression "ethylene oxide units or chains" is a chain comprising one or more ethylene oxide units of formula $-(O-CH_2-CH_2)-$.

The expression "Pol" is a polymerisable group that is able to react with the precursor of the polymer matrix. Depending on the polymer matrix chosen the person skilled in the art will know which polymerisable group Pol the organic compound and or the metal cluster compound should bear.

The polymerizable group Pol is typically a group comprising a function chosen from the group consisting of: carbon-carbon double bond, carbon-carbon triple bond, an azide function, a (meth)acrylate function, acrylate function, an amine function, a carboxylic function, an aldehyde function, a hydroxyl function, an alkoxy function, an iodine atom, a bromine atom and a chlorine atom; more preferably a function chosen from the group consisting of an acrylate function ($-O-C(=O)-CH=CH_2$), a methacrylate function ($-O-C(=O)-C(CH_3)=CH_2$), a carbon-carbon double bond and carbon-carbon triple bond.

Luminescence is emission of light by a substance not resulting from heat; this distinguishes luminescence from incandescence, which is light emitted by a substance as a result of heating. It is, thus, a form of cold body radiation. The energy of the electrons shifts upon excitation before going back to its base level. When the electrons return to their base level of energy, light is emitted. Fluorescence is luminescence wherein light emission occurs right after excitation, usually $10^{-9}$ to $10^{-6}$ s after the excitation. Phosphorescence is luminescence wherein light emission occurs after a longer lapse of time from the excitation, usually $10^{-6}$ to 10 s.

Definition of a metal cluster compound is given by F.A. Cotton in Inorg. Chem. 1964, 3, 1217 as: "a finite group of metal atoms that are held together mainly, or at least to a significant extent, by bonds directly between the metal atoms, even though some non-metal atoms may also be intimately associated with the cluster".

In the present invention, "metal cluster" is understood as 6 metal atoms which are covalently bound together and form metal-metal bonds. Metal-metal bonds enable delocalisation of all valence electrons on all metal atoms. The metal atoms of the metal cluster form a polyhedron. Each metal atom is considered as occupying a vertex (corner point) of the polyhedron.

The "metal cluster compound" comprises 8 face-capping ligands and/or edge bridging ligands, together referred as inner ligands.

A "ligand" is an ion or molecule that binds to the metal cluster to form a coordination complex. The bonding between the metal cluster and the ligand usually involves formal donation of one or more of the ligand's electron pairs.

"Face-capping ligands" are ligands that are located normally to the centre of one face of the polyhedron, *i.e.* the virtual line passing through the ligand and the centre of the face of the polyhedron is orthogonal to that very face.

"Edge-bridging ligands" are ligands that are located normally to the middle of a metal-metal bond, *i.e.* the virtual line passing through the ligand and the middle of the metal-metal bond is perpendicular to that very metal-metal bond.

The metal cluster compound of the present invention comprises 6 apical ligands.

"Apical ligands" are ligands located facing the vertexes of the polyhedron. The metal cluster and the inner ligands are referred together in the description as a "cluster core". The cluster core and the apical ligands are referred together as a "cluster unit" or "metal cluster unit".

The "cluster unit" or "metal cluster unit" has a negative charge, is anionic. Thus the metal cluster unit needs at least one counter cation. In other words, the metal cluster compound of the present invention comprises a metal cluster unit or metal cluster anion and at least one counter cation. Said counter cation can be either organic or inorganic.

Furthermore the term "metal cluster compound" as used in the present invention refers to a metal cluster compound as defined above having a nanometric size, preferably between about 0.5 nm to about 20 nm, more preferably between about 0.5 nm to about 2 nm.

The term "chalcogen" as used in the present invention refers to an atom of oxygen (O), sulphur (S), selenium (Se), tellurium (Te), polonium (Po) or livermorium (Lv), preferably O, S, Se or Te.

The term "organic ligand" as used in the present invention refers to an ion or a molecule that binds to a metal atom via a carbon, oxygen, nitrogen, sulphur or phosphorus atom. It can be notably CN, a carboxylate, SCN, $NO_3$, $NO_2$, $C_5H_5N$, $NH_3$, $NH_2$-$(CH_2)_2$-$NH_2$, $NC_5H_4$-$C_5H_4N$, $P(C_6H_5)_3$, $O=P(C_6H_5)_3$ or CO, particularly SCN, CN or a carboxylate, more particularly a carboxylate.

"Carboxylate" means, in the present invention, a group $R^d$-COO where $R^d$ represents a $C_1$-$C_6$ alkyl group, notably a $C_1$-$C_3$ alkyl group, in which one or several hydrogen atoms each can be replaced by a fluorine atom. It can be in particular a perfluorinated $C_1$-$C_6$ alkyl group, notably a perfluorinated $C_1$-$C_3$ alkyl group, i.e. a $C_1$-$C_3$ alkyl group in which all the hydrogen atoms have been replaced with a fluorine atom, such as a $C_2F_5COO$ or a $C_3F_7COO$ group.

"Alkali metal" as used in the present invention refers to lithium (Li), sodium (Na), potassium (K), rubidium (Rb), caesium (Cs) or francium (Fr), preferably Cs, Na or K, more preferably Cs.

Unless mentioned otherwise, the groups and radicals defined hereinabove may be unsubstituted or substituted by one or more substituents such as, for example, halogen, alkyl, alkoxy, aryl, heteroaryl, haloalkyl, haloalkoxy, alkoxycarbonyl, alkanoyl, aroyl, formyl, nitrile, nitro, amido, alkylthio, alkylsulfinyl, alkylsulfonyl, arylthio, arylsulfinyl, arylsulfonyl, amino, alkylamino, arylamino, dialkylamino and diarylamino.

## Luminescent Material

The material according to the invention is a material as defined in claim 1 comprising a polymer matrix functionalized with:

- an organic compound comprising a moiety of formula

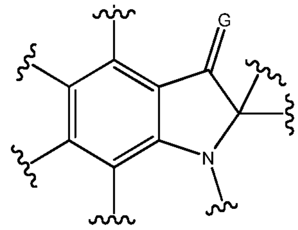

wherein G is :

- oxygen,
- sulfur,
- $NR^a$, $N^{(+)}R^aR^b$ with $R^a$ and $R^b$ are each independently H, $C_1$-$C_{18}$ alkyl, or aryl or heteraoaryl,
- CH-(EWG), C-$(EWG)_2$, $(EWG^1)$-C-$(EWG^2)$ with EWG, $EWG^1$ and $EWG^2$ being an electron withdrawing group,

- and a metal cluster compound comprising a moiety of formula, an anion of formula $[M_6Q^i_8L^a_6]^{d-}$ wherein:

  - M represents molybdenum (Mo), tungsten (W), rhenium (Re), or a mixture thereof, preferably Mo or W;
  - $Q^i$ is an inner ligand and represents a halogen or a chalcogen atom, preferably a halogen atom, or a mixture thereof; and
  - $L^a$ is an apical ligand and represents a halogen atom, an organic ligand or a mixture thereof;
  - d ranges from -4 to + 4, preferably 2 to 4, more preferably 2.

The polymer matrix useful for the present invention functions as a support that can be easily printed or shaped, for example into films, fibers, bulk materials, etc. Suitable polymer matrix can be obtained by mixing one or more polymers, one or more monomers, or a mixture thereof and allowed to reticulate.

The polymer matrix useful for the present invention can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyester such as polyethylene naphtalate, polyethylene terephthalate, polylactic acid (PLA), poly(lactic-co-glycolic) acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose and hydroxyalkylcellulose such as ethoxycellulose, preferably polymethylmethacrylate (PMMA) or polydimethylsiloxane (PDMS) or cellulose acetate phthalate (CAP), more preferably polymethylmethacrylate (PMMA).

The polymer matrix useful for the present invention can also be selected from the group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO) and mixtures thereof.

Due to the presence of a conjugated donor-accepted fragment, the organic compound useful for the present invention exhibits fluorescent properties, in particular strong fluorescence in water. Furthermore this organic compound is robust to photobleaching and ideally arising from an oxidation reaction.

The term "photobleaching" (or fading) is the photochemical alteration of a dye or a fluorophore molecule such that it permanently is unable to fluoresce.

According to a preferred embodiment of the present invention the organic compound useful for the present invention is a 3-oxindole (i.e wherein G = oxygen).

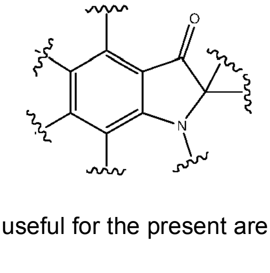

Examples of 3-oxindoles particularly useful for the present are allylated 3-oxindoles as follows:

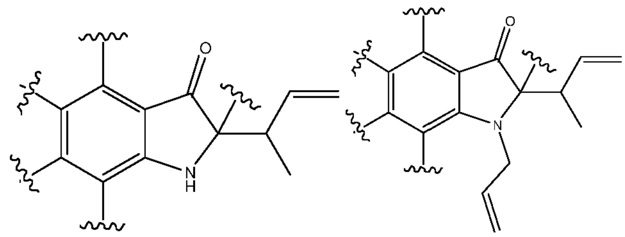

These organic compounds are typically a blue green emitters and can advantageously being prepared according to the procedure reported in Hortense Lauwick, Yang Sun, Huriye Akdas-Kilig, Sylvien Dérien, and Mathieu Achard, Chem Eur. J, 2018, 24, 7964-7969.

Other examples of organic compounds useful for the present invention include compounds wherein CH-(EWG), C-$(EWG)_2$, $(EWG^1)$-C-$(EWG^2)$ with EWG, $EWG^1$ and $EWG^2$ being an electron withdrawing group (such as nitrile (-C=N); ketone (-(C=O)-$R^c$) or ester (-(C=O)-$OR^c$) wherein $R^c$ is independently H, $C_1$-$C_{18}$ alkyl, aryl or heteroaryl (such as pyridinyl, pyrimidinyl); aryl or heteroaryl):

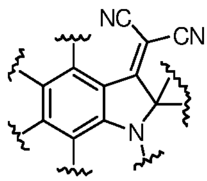 ; 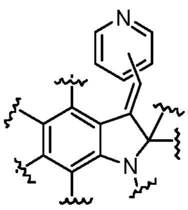 ; 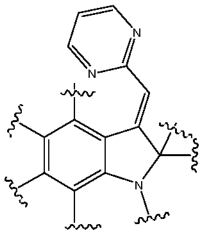

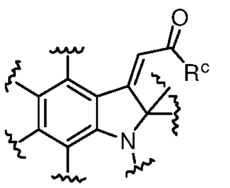

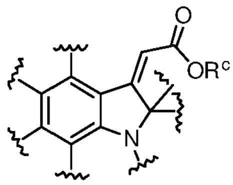

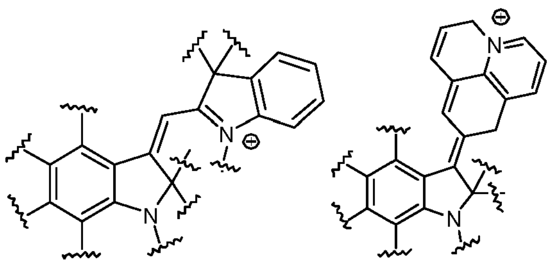

The metal cluster compound useful for the present invention shows an octahedral transition metal cluster unit. It is a robust phosphorescent emitter, in particular a red to near infra-red phosphorescent emitter. In a particular embodiment of the present invention, the metal cluster compound comprises an anion, a moiety of the general formula $[M_6Q^i_8L^a_6]^{d-}$ wherein:

- M represents molybdenum (Mo), tungsten (W), rhenium (Re), or a mixture thereof,;
- $Q^i$ represents Cl, Br, I, S, Se or a mixture thereof,; and
- $L^a$ represents Cl, Br, I, CN, SCN, a carboxylate or a mixture thereof..

Advantageously, the metal cluster compound of the present invention comprises an anion, a moiety of the general formula $[M_6Q^i_8L^a_6]^{d-}$ wherein:

- M represents Mo or W, preferably Mo;
- $Q^i$ represents Cl, Br or I; and

- $L^a$ represents Cl, Br, I, a $C_3F_7COO$ or a $C_2F_5COO$ group.

As specified above, the organic compound and metal cluster compound can be independently:

- Linked to the polymer matrix by
  - Covalent bond
  - Electrostatic interaction
  - Supramolecular interaction
  - Complexation / adsorption
- and/ or can be dispersed within the polymer matrix (admixture/ embedded)

According to the invention, the organic compound can be linked to the polymer matrix by covalent bond or the organic compound is dispersed with the polymer matrix.

Still according to the invention, the metal cluster compound is linked to the polymer matrix by covalent bond or the metal cluster compound is linked to the polymer matrix by supramolecular interaction or complexation.

As specified above the metal cluster compound of the present invention comprises an anion, a metal cluster unit and a counter cation so that metal cluster is roughly electrically neutral. Said counter cation can be organic or inorganic. The organic cation can enable the good integration of the metal cluster compound in the polymer matrix, to avoid phase segregation.

In most embodiments of the present invention the material according to the invention, the luminescent material, is soluble and whatever the embodiments of the present invention said luminescent material remains easily processable (by dipcoating, spin-coating, drop-casting, printing etc).

**<u>First embodiment of the present invention</u>**

In a first embodiment of the present invention the material is obtained by polymerizing the organic compound, the metal cluster compound and a precursor of the polymer matrix, the metal cluster and the organic compound being copolymerized with the precursor of the polymer matrix.

In this particular first embodiment, the organic compound or the organic emitter comprises at least one polymerisable group Pol that is able to react with the precursor of the polymer matrix. The organic compound is represented by formula:

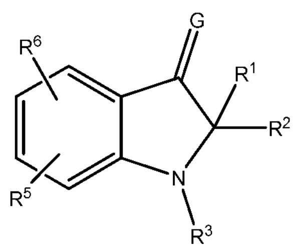

wherein:

G is as defined above,

$R^1$ and $R^2$ are each independently selected from alkyl, aryl, alkenyl (such as allyl), alkynyl (such as propargyl), -O-C(=O)-CH=$CH_2$, -O-C(=O)-C($CH_3$)=$CH_2$, and -L-Pol,

$R^1$ and $R^2$ may form together a cycloalkyl,

$R^3$ is selected from H, alkyl, -C=Oalkyl, C=Oaryl, -$CO_2$alkyl, $CO_2$aryl, - $SO_2$alkyl, -$SO_2$aryl, alkenyl, alkynyl (such as propargyl),-O-C(=O)-CH=$CH_2$, - O-C(=O)-C($CH_3$)=$CH_2$,-L-Pol and -$SiY^1Y^2Y^3$ wherein $Y^1$, $Y^2$ and $Y^3$ are each independently selected from H, alkyl, alkoxy, cycloalkyl, aryl, aryloxy and aralkyl (for example -$SiY^1Y^2Y^3$ is -$Si(CH_3)_3$),

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate $-SCF_3$), $-O-C(=O)-CH=CH_2$, $-O-C(=O)-C(CH_3)=CH_2$ or-L-Pol,

With the proviso that at least one of $R^1$, $R^2$, $R^3$, $R^5$ or $R^6$ is -L-Pol, L being a linker having from 1 to 30 methylene groups optionally interrupted by one of more atoms or groups of atoms chosen from the group consisting of aromatic rings, -O-, -CO-, -S-, -CH=CH-, -C = C-, -COO-, -OC(O)-, -CH=N-, -C(O)NH, - N=N-, -NH-CO- and mixtures thereof, Pol being a polymerizable group.

Depending on the polymer matrix chosen the person skilled in the art will know which polymerisable group Pol the organic compound should bear. For instance for polyacrylate or PolyMethylMethacrylate (PMMA) as polymer matrix, the organic compound will have to bear acrylate or methacrylate functions or groups. For PolyDiMethylSiloxane (PDMS) as polymer matrix, the organic compound will have to bear either alkenyl functions or groups, hydroxysilane group, trialkoxysilane group, or silane group (silicium hydride). For polyurethane (PU) as polymer matrix, the organic compound will have to bear alcohol functions or groups, amine function, isocyanate function.

The preparation of such organic compound is well known by the person skilled in the art. For example it can be prepared as reported in Hortense Lauwick, Yang Sun, Huriye Akdas-Kilig, Sylvien Dérien, and Mathieu Achard, Chem Eur. J, 2018, 24, 7964-7969

In this particular first embodiment, the metal cluster compound or the inorganic phosphorescent emitter also comprises at least one polymerisable group Pol that is able to react with the precursor of the polymer matrix. The metal cluster compound in this particular embodiment has an organic counter cation, said organic counter cation containing a cationic head substituted by at least one substituent including at least one a polymerizable group Pol.

The metal cluster compound in this particular embodiment is represented by formula $X^+_d[M_6Q^i_8L^a_6]^{d-}$ wherein $[M_6Q^i_8L^a_6]^{d-}$ is as defined above and X is an organic counter cation, said organic counter cation containing a cationic head substituted by at least one substituent including a polymerizable group and having the following formula $(L1)_m$-Cat-$(L2)_{n-}$Pol,
wherein

L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, -OC(O)-, -CH=N-, -C(O)NH, -N=N-, -NH-CO- and mixtures thereof m and n independently 0 or 1,
Cat represents a cationic head and is chosen from the group consisting of an imidazolium, a pyridinium, a pyrolidinium, an ammonium, a phosphonium, a hydroxyphosphonium and a sulfonium, preferably an ammonium,
Pol is a polymerizable group.

Such metal cluster compound having an organic counter cation containing a cationic head substituted by at least one substituent including a polymerizable group can for example be prepared as disclosed in Amela-Cortes, Y. Molard, S. Paofai, A. Desert, J.-L. Duvail, N. G. Naumov and S. Cordier, Dalton Trans., 2016, 45, 237-245 or in application EP 2 754 706.

The precursor of the polymer matrix of this first embodiment is for example a precursor of a polymer selected in the group consisting of polyamides, polycarbonates, polyolefins such as polyethylene, polyimides, polyacrylamides (PAM), poly(meth)acrylates such as polymethylmethacrylate (PMMA), styrenic polymers such as polystyrene, polyurethane, polyvinylchloride, polyester such as polyethylene naphtalate, polyethylene terephthalate and polylactic acid (PLA), poly(lactic-co-glycolic)acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose, hydroxyalkylcellulose such as hydroxyethylcellulose.

In this particular embodiment the polymer matrix is preferably polymethylmethacrylate (PMMA) or polydimethylsiloxane (PDMS).

PMMA with a triplet energy of 3.1 eV is indeed a suitable wide band gap host material that does not disturb infrared or visible triplet states emitters. The same applies to polydimethylsiloxane (PDMS).

In this particular embodiment, interactions between the organic compound or the metal cluster compound and the polymer matrix are insured by covalent bonds.

<u>**Second embodiment of the present invention**</u>

According to a second embodiment of the present invention, the material is obtained by:

(i) polymerizing a precursor of the polymer matrix and the organic compound in a solvent containing the dissolved

metal cluster compound and evaporating the solvent; or

(ii) polymerizing a precursor of the polymer matrix and the organic compound, dipping said resulting polymer in a solvent containing the dissolved metal cluster compound and evaporating the solvent;

the organic compound being copolymerized with the precursor of the polymer matrix.

In this second embodiment, the precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units.

The polymer or copolymer contains at least 4, notably between 4 to 200 ethylene oxide (EO) monomer units, in particular between 6 and 150 ethylene oxide (EO) monomers or between 6 and 100 ethylene oxide (EO) monomers.

Beside the one or several poly(ethylene oxide) (PEO) chains, the copolymer may include one or several polymer chains chosen from the group consisting of polyamide, polycarbonate, polyethylene (PE), polyethylene naphthalate (PEN), polyethylene terephthalate (PET), polyimide, polyacrylate (PAM), polymethylmethacrylate (PMMA), polystyrene (PS), polyurethane, polycarbamate, polyester, polydimethylsiloxane (PDMS), polyacrylic acid (PA), polyurethane (PU) polyvinylpyrrolidone (PVP), polyacrylamide (PAM), alkyde, polycaprolactone, polyvinylalcohol, polylactic acid (PLA), poly(lactic-co-glycolic) acid PLGA, and a mixture thereof.

The polymer or copolymer also can comprise crosslinkable monomer units so as to be crosslinked. Said crosslinkable monomer units can be an ureasil or urethanesil group. Such Ureasil-PEO polymer matrix can be synthetized according to J. Sol-Gel Sci. Technol., 2014, 70:317.

The polymer-matrix can comprise, notably can consist in, a linear or branched copolymer containing one or several poly(ethylene oxide) (PEO) chains that are part of the backbone chain of the copolymer.

According to this second embodiment, the polymer or copolymer can advantageously be selected from the group consisting of group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof.

The preparation of such polymer or copolymer is well known by the person skilled in the art. For example such polymer or copolymer can be prepared as described in M. Robin, N. Dumait, M. Amela-Cortes, C. Roiland, M. Harnois, E. Jacques, H. Folliot and Y. Molard, Chem. Eur. J., 2018, 24, 4825-4829.

According to this second embodiment, the organic compound is as defined in the first embodiment. Thus the organic compound comprises at least one polymerisable group Pol that is able to react with the precursor of the polymer matrix and is represented by the formula:

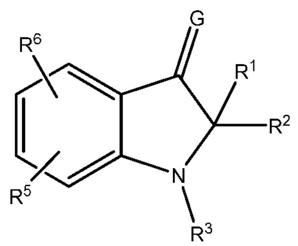

G is as defined above,

$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$ and -L-Pol,

$R^1$ and $R^2$ may form together a cycloalkyl,

$R^3$ is selected from H, alkyl, -C=Oalkyl, C=Oaryl, -$CO_2$alkyl, $CO_2$aryl, - $SO_2$alkyl, -$SO_2$aryl, alkenyl, alkynyl (such as propargyl), -O-C(=O)-CH=$CH_2$, - O-C(=O)-C($CH_3$)=$CH_2$, -L-Pol and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si($CH_3$)$_3$)

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$ or -L-Pol,

With the proviso that at least one $R^1$, $R^2$, $R^3$, $R^5$ or $R^6$ is L-Pol, L being a linker having from 1 to 30 methylene groups optionally interrupted by one of more atoms or groups of atoms chosen from the group consisting of aromatic rings, -O-, -CO-, -S-, - CH=CH-, -C = C-, -COO-, -OC(O)-, -CH=N-, -C(O)NH, -N=N-, -NH-CO- and mixtures thereof, Pol being a polymerizable group which reacts with the precursor of the polymer matrix.

The metal cluster compound useful for this second embodiment is represented by formula $X^{+}_{d}[M_6Q^{i}_{8}L^{a}_{6}]^{d-}$ wherein $[M_6Q^{1}_{8}L^{a}_{6}]^{d-}$ is as defined above and X is a counter cation chosen from the group consisting of alkali metal cation, hydronium, and an ammonium, preferably chosen between Cs, K, Na, Li, $H_3O$, $(nC_4H_9)_4N$ and $NH_4$, more preferably Cs.

Advantageously the metal cluster for this specific embodiment is selected from the group consisting of $Cs_2Mo_6Br_{14}$, $Cs_2Mo_6Cl_{14}$, $Cs_2Mo_6I_{14}$, $Cs_2Mo_6Br_8Cl_6$, $Cs_2Mo_6I_8(OCOC_2F_5)_6$, $Cs_2Mo_6I_8(OCOC_3F_7)_6$, $(NH_4)_2Mo_6Br_8SCN_6$, $K_2Mo_6Cl_{14}$, $Cs_2W_6I_{14}$ , $(H_3O)_2Mo_6Cl_{14}$, $(H_3O)W_6Cl_{14}$ with X chosen from the group alkali metal, hydronium and ammonium.

The preparation of such metal compound is well known by the person skilled in the art. For example, the ternary salts $Cs_2Mo_6Cl_{14}$, $Cs_2Mo_6Br_8Cl_6$, $Cs_2Mo_6Br_8I_6$, $Cs_2Mo_6I_{14}$ can be prepared according to Prévôt et al. J. Mater. Chem. C 2015, 3, 5152. The ternary salt $Cs_2Mo_6I_8(OCOC_3F_7)_6$ can be prepared according to Prévôt et al. Adv. Funct. Mater. 2015, 25, 4966-4975. The ternary salt $Cs_2Mo_6I_8(OCOC_2F_5)_6$ can be prepared according to the procedure described in Dalton Trans., 2016, 45, 237. The ternary salt $Cs_2W_6I_{14}$ can be prepared according to Hummel et al. Eur. J. Inorg. Chem. 2016, 5063-5067. The ternary salt $K_2Mo_6Cl_{14}$ can be prepared according to Lindler et al., Z. Anorg. Allg. Chem., 1923, 130, 209-228. The ternary salt $(H_3O)_2Mo_6Cl_{14}$ can be prepared according to Sheldon et al., J. Chem. Soc., 1960, 1007-1014. The ternary salt $(H_3O)_2W_6Cl_{14}$ can be prepared according to Schafer et al., Monatsh. Chem. 1971, 102, 1293-1304.

In this second embodiment, interactions between the organic compound and the polymer matrix are insured by covalent bonds while interactions between the cluster compound and the polymer are insured by supramolecular interactions occuring between the cations of the metal cluster compound and the PEO chains of the polymer.

## Third embodiment of the present invention

According to a third embodiment of the present invention, the material is obtained by:

(i) polymerizing a precursor of the polymer matrix in a solvent containing the dissolved organic compound and metal cluster compound, and evaporating the solvent; or
(ii) polymerizing a precursor of the polymer matrix, dipping the resulting polymer in a solvent containing the dissolved organic compound and metal cluster compound and evaporating the solvent.

In this third embodiment the organic compound does not need to show a polymerizable group that is able to react/ polymerize/ create a covalent bound with the precursor of the polymer matrix. The organic compound useful in this third embodiment is represented by formula

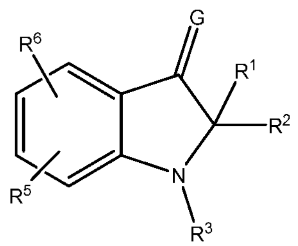

G is as defined above,

$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$,

$R^1$ and $R^2$ may form together a cycloalkyl,

$R^3$ is selected from H, alkyl, -C=Oalkyl, C=Oaryl, -$CO_2$alkyl, $CO_2$aryl, - $SO_2$alkyl, -$SO_2$aryl, alkenyl, alkynyl (such as propargyl), -O-C(=O)-CH=$CH_2$, - O-C(=O)-C($CH_3$)=$CH_2$ and -$SiY^1Y^2Y^3$ wherein $Y^1$, $Y^2$ and $Y^3$ are each independently selected from H, alkyl, alkoxy, cycloalkyl, aryl, aryloxy and aralkyl (for example -$SiY^1Y^2Y^3$ is -$Si(CH_3)_3$)

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate $-SCF_3$), $-O-C(=O)-CH=CH_2$, $-O-C(=O)-C(CH_3)=CH_2$.

The metal cluster compound useful for this third embodiment is the same as the one disclosed above for the second embodiment of the present invention. Thus the metal cluster compound useful for this third embodiment does not need to show a polymerizable group that is able to react/ polymerize/ create a covalent bound with the precursor of the polymer matrix. It is represented by formula $X^+_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, K, Na, Li, $H_3O$, $(nC_4H_9)_4N$ and $NH_4$, more preferably Cs.

The precursor of the polymer matrix useful for this third embodiment is a precursor of a linear or branched polymer or copolymer containing one or several poly(ethylene oxide) (PEO) chains, said polymer or copolymer being optionally crosslinked and each PEO chain having at least 4 ethylene oxide monomer units.

The polymer matrix useful for this third embodiment of the present invention can be selected from the group consisting of group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof, preferably polymethylmethacrylate-poly(ethylene oxide) methacrylate (PMMA-PEOMA).

In this third embodiment, the organic compound is weakly bound to the polymer matrix by lipophilic-lipophilic interactions. The interactions between the cluster compound and the polymer are insured by supramolecular interactions occuring between the cations of the metal cluster compound and the PEO chains of the polymer.

## Fourth embodiment of the present invention

According to a fourth embodiment of the present invention, the material is obtained by:

(i) polymerizing a precursor of the polymer matrix and the metal cluster compound in a solvent containing the dissolved organic compound and evaporating the solvent; or

(ii) polymerizing a precursor of the polymer matrix and the metal cluster compound, dipping said resulting polymer in a solvent containing the dissolved organic compound and evaporating the solvent;

wherein the metal cluster compound is copolymerized with the precursor of the polymer matrix.

The organic compound useful for this fourth embodiment is the same as the one disclosed above for the third embodiment. Thus the organic compound useful for this fourth embodiment does not need to show a polymerizable group that is able to react/ polymerize/ create a covalent bound with the precursor of the polymer matrix. It is represented by formula

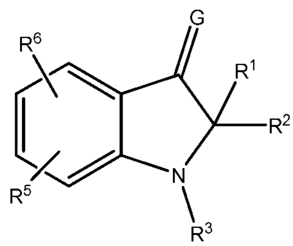

G is as defined above,

$R^1$ and $R^2$ are each independently selected from alkyl, aryl, alkenyl, alkynyl (such as propargyl), $-O-C(=O)-CH=CH_2$, $-O-C(=O)-C(CH_3)=CH_2$,

$R^1$ and $R^2$ may form together a cycloalkyl,

$R^3$ is selected from H, alkyl, -C=Oalkyl, C=Oaryl, $-CO_2$alkyl, $CO_2$aryl, - $SO_2$alkyl, $-SO_2$aryl, alkenyl, alkynyl (such as propargyl), $-O-C(=O)-CH=CH_2$, - $O-C(=O)-C(CH_3)=CH_2$ and $-SiY^1Y^2Y^3$ wherein $Y^1$, $Y^2$ and $Y^3$ are each inde-

pendently selected from H, alkyl, alkoxy, cycloalkyl, aryl, aryloxy and aralkyl (for example $-SiY^1Y^2Y^3$ is $-Si(CH_3)_3$)

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate $-SCF_3$), $-O-C(=O)-CH=CH_2$, $-O-C(=O)-C(CH_3)=CH_2$.

The metal cluster compound useful for this fourth embodiment is the same as the one disclosed above for the first embodiment. Thus the metal cluster compound is represented by formula $X^+_d[M_6Q^i_8L^a_6]^{d-}$ wherein $[M_6Q^i_8L^a_6]^{d-}$ is as defined above and X is an organic counter cation containing a cationic head substituted by at least one substituent including a polymerizable group and having the following formula $(L1)_m$-Cat-$(L2)_n$-Pol
wherein

L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, -OC(O)-, -CH=N-, -C(O)NH, -N=N-, -NH-CO- and mixtures thereof,
m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group.

The polymer matrix in this fourth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate, polylactic acid (PLA), poly(lactic-co-glycolic) acid (PLGA), polyacrylic acid, polyvinylalcohol, polyethers such as polyethylene oxide (PEO), polyoxysilanes such as polydimethylsiloxane (PDMS), preferably polymethylmethacrylate (PMMA) or polydimethylsiloxane (PDMS), more preferably polymethylmethacrylate (PMMA).

In this fourth embodiment, the organic compound is weakly bound to the polymer matrix by lipophilic-lipophilic interactions. Interactions between the metal cluster compound and the polymer matrix are insured by covalent bonds.

## Fifth embodiment of the present invention

According to a fifth embodiment of the present invention, the material is obtained by reacting the organic compound and the metal cluster compound to form a salt, and polymerizing a precursor of the polymer matrix and the salt in a solvent and evaporating the solvent.

The organic compound of this fifth embodiment is represented by formula:

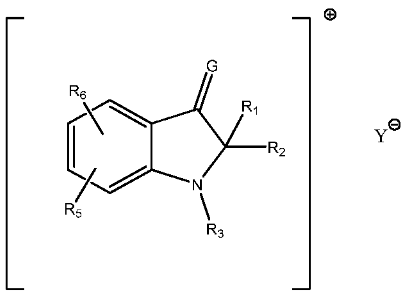

wherein:

G is as defined above,

$R^1$ and $R^2$ are each independently selected from alkyl, aryl, alkenyl, alkynyl (such as propargyl),$-O-C(=O)-CH=CH_2$, $-O-C(=O)-C(CH_3)=CH_2$, $-(L3)_p-(Cat)_r-(L4)_q-(Pol)_s$, $-(L3)_p-(Pol)_r-(L4)_q-(Cat)_s$,

$R^1$ and $R^2$ may form together a cycloalkyl,

$R^3$ is selected from H, alkyl, -C=Oalkyl, C=Oaryl, $-CO_2$alkyl, $CO_2$aryl, - $SO_2$alkyl, $-SO_2$aryl, alkenyl, alkynyl (such

as propargyl), -O-C(=O)-CH=$CH_2$, - O-C(=O)-C($CH_3$)=$CH_2$, -$(L3)_p$-$(Cat)_r$-$(L4)_q$-$(Pol)_s$, -$(L3)_p$-$(Pol)_r$-$(L4)_q$-$(Cat)_s$ and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is - Si$(CH_3)_3$),

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$, -$(L3)_p$-$(Cat)_r$-$(L4)_q$-$(Pol)_s$, -$(L3)_p$-$(Pol)_r$-$(L4)_q$-$(Cat)_s$,

wherein

L3 and L4 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, -OC(O)-, -CH=N-, -C(O)NH, -N=N-, -NH-CO- and mixtures thereof,

p and q independently 0 or 1,

Cat is a cationic group, preferably selected from imidazolium, a pyridinium, a pyrolidinium, an ammonium, a phosphonium, a hydroxyphosphonium and a sulfonium, Pol is a polymerisable group,

r and s independently 0 or 1,

With the proviso that at least one of $R^1$, $R^2$, $R^3$, $R^5$ or $R^6$ is -$(L3)_p$-$(Cat)_r$-$(L4)_q$-$(Pol)_s$, or -$(L3)_p$-$(Pol)_r$-$(L4)_q$-$(Cat)_s$

The metal cluster compound of this fifth embodiment is the same as the one disclosed above for the second and third embodiments of the present invention. It is represented by formula $X^+_d[M_6Q^i_8L^a_6]^{d-}$ wherein $[M_6Q^i_8L^a_6]^{d-}$ is as defined above and X is an counter cation chosen from the group consisting of alkali metal cation, hydronium, and an ammonium, preferably chosen between Cs, K, $H_3O$, $(nC_4H_9)_4N$ and $NH_4$, more preferably Cs.

The salt of this fifth embodiment is represented by formula:

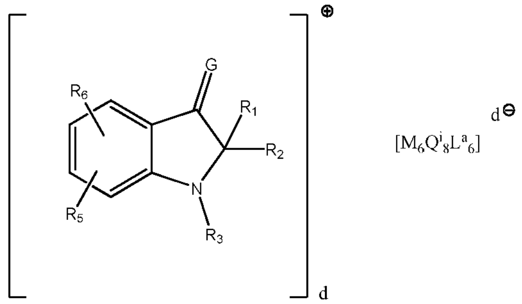

The polymer matrix in this fifth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate polylactic acid (PLA), poly(lactic-co-glycolic) acid (PLGA), polyvinylalcohol, polyethers such as polyethylene oxide (PEO) and polyoxysilanes such as polydimethylsiloxane (PDMS), preferably polymethylmethacrylate (PMMA) and polydimethylsiloxane (PDMS), more preferably polymethylmethacrylate (PMMA).

In this fifth embodiment, the organic compound is covalently bounded to the polymer backbone and acts as the metal cluster unit counter cation so that electrostatic interactions maintained the metal cluster unit in the organic matrix.

## Sixth embodiment of the present invention

According to a sixth embodiment of the present invention the material is obtained by:

(i) reacting the organic compound and the metal cluster compound to form a complex and polymerizing a precursor of the polymer matrix and the complex in a solvent and evaporating the solvent or

ii) polymerizing a precursor of the polymer matrix and the organic compound, dipping said resulting polymer in a solvent containing the dissolved metal cluster compound and evaporating the solvent

wherein the organic compound is copolymerized with the precursor of the polymer matrix.

The organic compound useful for this sixth embodiment is represented by formula:

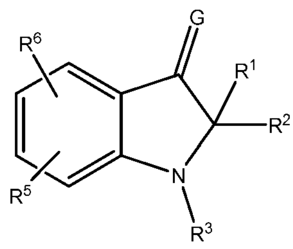

wherein:

G is as defined above,

$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$, -L6-Pol, -L7-Cycle, -L8-PEO, -L9-PEO-L10- Pol, and -L11-Cycle-L12-Pol,

$R^1$ and $R^2$ may form together a cycloalkyl,

$R^3$ is selected from H, alkyl, -C=Oalkyl, C=Oaryl, -$CO_2$alkyl, $CO_2$aryl, - $SO_2$alkyl, -$SO_2$aryl, alkenyl, alkynyl (such as propargyl), -O-C(=O)-CH=$CH_2$, - O-C(=O)-C($CH_3$)=$CH_2$, -L6-Pol, -L7-Cycle, -L8-PEO, -L9-PEO-L10-Pol, -L11-Cycle-L12-Pol and -$SiY^1Y^2Y^3$ wherein $Y^1$, $Y^2$ and $Y^3$ are each independently selected from H, alkyl, alkoxy, cycloalkyl, aryl, aryloxy and aralkyl (for example -$SiY^1Y^2Y^3$ is -$Si(CH_3)_3$),

$R^5$ and $R^6$ represent each independently H, alkyl, aryl, heteroaryl, hydroxyl, amino, halo, haloalkyl such as trifluoromethyl, haloalkylthio such as perhaloalkylthio groups such as trifluoromethylthiolate -SCF3, -O-C(=O)-CH=$CH_2$, -O-C(=O)-C($CH_3$)=$CH_2$, -L6-Pol, -L7-Cycle, -L8-PEO, -L9-PEO-L10-Pol, or -L11-Cycle-L12-Pol,

L6, L7, L8, L9, L10, L11 and L12 are each independently linkers having from 1 to 30 methylene groups, optionally interrupted by one of more atoms or groups of atoms chosen from the group consisting of aromatic rings, -O-, -CO-, -S-, - CH=CH-, -C = C-, -COO-, -OC(O)-, -CH=N-, -C(O)NH, -N=N-, -NH-CO- and mixtures thereof,

Cycle being a cyclic ether comprising 12 to 21 ring atoms at least 4 ethylene oxide units and optionally interrupted by one or more nitrogen atoms,

PEO being a chain comprising at least 4 ethylene oxide units and optionally interrupted by one or more nitrogen atoms,

And with the proviso that

(i) at least one of $R^1$, $R^2$, $R^3$, $R^5$ or $R^6$ is -L6-Pol and at least one of $R^1$, $R^2$, $R^3$, $R^5$ or $R^6$ is -L7-Cycle or -L8-PEO or

(ii) at least one of $R^1$, $R^2$, $R^3$, $R^5$ or $R^6$ is -L9-PEO- L10- Pol, -L11-Cycle-L12-Pol

The metal cluster compound useful for this sixth embodiment is the same as the one disclosed above for the second, third and fifth embodiments of the present invention. It is represented by formula $X^+_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, Na, K, Li, $H_3O$, $(nC_4H_9)_4N$ or $NH_4$, more preferably Cs.

The polymer matrix in this fifth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate, polylactic acid (PLA), poly(lactic-co-glycolic) acid (PLGA), polyvinylalcohol, polyethers such as polyethylene oxide (PEO) and polyoxysilanes such as polydimethylsiloxane (PDMS), preferably polymethylmethacrylate (PMMA) or polydimethylsiloxane (PDMS), more preferably polymethylmethacrylate (PMMA).

In this sixth embodiment, the organic compound is covalently bound to the polymer. Supramolecular interactions between the PEO chain of the organic compound and the metal cluster compound counter cation insure the homogeneous

integration of the metal cluster compound in the organic matrix.

**Seventh embodiment of the present invention**

According to a seventh embodiment the material is obtained by solubilizing in a solvent the polymer matrix, the organic compound and the metal cluster compound and evaporating the solvent. In this embodiment neither the organic compound nor the metal cluster compound need to show a polymerizable group able to react with the polymer matrix.

According to this seventh embodiment, the organic compound is the same as the one disclosed for the third embodiment. It is represented by formula

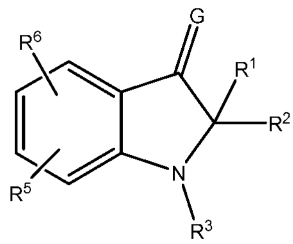

G is as defined above,

$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$,

$R^1$ and $R^2$ may form together a cycloalkyl,

$R^3$ is selected from H, alkyl, -C=Oalkyl, C=Oaryl, -$CO_2$alkyl, $CO_2$aryl, - $SO_2$alkyl, -$SO_2$aryl, alkenyl, alkynyl (such as propargyl), -O-C(=O)-CH=$CH_2$, - O-C(=O)-C($CH_3$)=$CH_2$ and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si($CH_3$)$_3$),

$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$.

According to this seventh embodiment, the metal cluster compound is the same as the one disclosed above for the second, third, fifth and sixth embodiments of the present invention. It is represented by formula $X^+_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, Na, K, Li, $H_3O$, $(nC_4H_9)_4N$ or $NH_4$, more preferably Cs.

The polymer matrix in this seventh embodiment can be selected in the group consisting of polyamides, polycarbonates, polyolefins such as polyethylene, polyimides, polyacrylamide, poly(meth)acrylates such as polymethylmethacrylate (PMMA), styrenic polymers such as polystyrene, polyurethane, polyvinylchloride, polyester such as polyethylene naphtalate, polyethylene terephthalate, polylactic acid (PLA), poly(lactic co-glycolic)acid (PLGA), polyvinylalcohol, polyethers such as polyethylene oxide (PEO), polyoxysilanes such as polydimethylsiloxane (PDMS), cellulose ester such as cellulose acetate phthalate (CAP), alkylcellulose such as ethylcellulose, and hydroxyalkylcellulose such as hydroxyethylcellulose, preferably polymethylmethacrylate (PMMA) or polydimethylsiloxane (PDMS) or cellulose acetate phthalate (CAP), more preferably polymethylmethacrylate (PMMA) or cellulose acetate phthalate (CAP) .

In this seventh embodiment, only weak interactions maintained the organic and metal cluster compound well dispersed in the host matrix.

As stipulated above, in most embodiments of the present invention the material according to the invention, the luminescent material, is soluble and whatever the embodiments said material remains easily processable (by dipcoating, spin-coating, drop-casting, printing etc). Any solvent able to solubilize the material can be used.

The luminescent material according to the present invention can be used for data recording, data storage, anticounterfeiting, sensing, optoelectronics or theranostic applications.

It can be used in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.

More particularly, materials comprising PMMA or cellulose (CAP) matrix are very useful for data storage and

anticounterfeiting since PMMA or cellulose (CAP) exhibit low gas permeability.

On the contrary materials comprising PDMS are very useful for gas sensing and anticounterfeiting since PDMS exhibits a rather high gas permeability (much higher than PMMA).

The present invention may be better understood with reference to the following example. These examples are intended to be representative of specific embodiments of the invention.

**EXAMPLES:**

$^{1}H$ Nuclear Magnetic Resonance (NMR) experiments in solution were realized in deuterated acetone with a Bruker Ascend™ 500 MHz NMR spectrometer at 298 K. All signals were referenced to the methyl signals of TMS at $\delta$= 0 ppm.

$^{19}F$ NMR experiments in solution were realized in deuterated acetone with a Bruker Ascend™ 400 MHz NMR spectrometer at 298 K operating at larmor frequency of 376 MHz

InfraRed (IR) spectra were recorded with a IR spectra were recorded with a FTIR ATR Perkin Elmer spectrum two spectrometer.

Energy Dispersive X-Ray Analysis (EDX), referred to as EDS or EDAX, is an X-ray technique used to identify the elemental composition of materials. It was performed on the CMEBA SCANMAT analysis platform with a JEOL JSM 7100 F EDS EBSD Oxford.

Emission properties:

Luminescence spectra were recorded directly on thin polymer films with an ocean optic QE65000 photodetector mounted via an optical fiber on an optical microscope Nikon 80i. The excitation source is made of either a Nikon Intensilight equipped with optical filters to select the excitation wavelength with a bandwidth of 380-420 nm, or a 405 nm 5mW laser diode.

UV-vis absorption measurements were performed on a Varian Cary 5000 UV-Vis-NIR spectrophotometer.

The absolute quantum yields (AQY) were measured with a C9920-03 Hamamatsu system equipped with a 150 W xenon lamp, a monochromator, a Spectralon integrating sphere whose internal atmosphere was controlled by a $N_2$ inlet and a PMA-12 photomultiplier. Pieces of materials (5mm*5mm) were deposited in quartz cells to realize the measurements. Absorption of the excitation wavelength was kept higher than 50 % to insure the reliability of the measurement.

Lifetime measurements and TRPL mapping at 296 K were realized using a picosecond laser diode (Jobin Yvon deltadiode, 375 nm) and a Hamamatsu C10910-25 streak camera mounted with a slow single sweep unit. Signals were integrated on the whole emission decay. Fits were obtained using origin software and the goodness of fit judge by the reduced $\chi^2$ value and residual plot shape.

Temperature dependent lifetime measurements were realized using a Edinburgh FLS960 spectrometer equipped with a R928P Hamamatsu photodetector, a microflash and nanoflash lamps. Detection was realized on a 10 nm bandwith centred on the emission max of the desired emitter. Temperature was controlled using an Oxford Instrument Optistat cryostat.

FIGURES:

Figure 1 represents the emission spectra under continuous irradiation (Nikon intensilight set up) at room temperature in air of material 1 of Example 1 (PDMSHyb Example 1), the inset shows the cluster emission signal at the beginning (plain line) and at the end (dashed line) of irradiation.

Figure 2 represents the follow up of emission maxima with time under continuous irradiation of material 1 of Example 1 (PDMSHyb Example 1).

Figure 3 represents the normalized emission spectra of material 1 of Example 1 (PDMSHyb Example 1) before (plain line) and after dashed) irradiation with a 405 nm 5mW laser diode.

Figure 4 represents the normalized emission spectra of material 2 of Example 2 (PEGMA-PMMAHyb) before (plain line) and after (dashed) irradiation.

Figure 5 represents the emission spectra of material 3 of Example 3 (PMMAHyb) before (plain line) and after (dashed line) irradiation irradiation with a 405 nm 5mW laser diode.

Figure 6 represents the emission spectra of material 4 of Example 4 (Phyb@cellulose (CAP) ou CAPHyb) under air (plain line) and $N_2$ saturated atmosphere (dashed line).

Figure 7 represents the IR spectra of Cellulose Acetate Phthalate (CAP) and $Cs_2Mo_6I_8(OCOC_2F_5)_6$ (MoIP), and CAP doped with 1 or 10 weight % (wt%) of MoIP labelled MoIP1@CAP and MoIP10@CAP respectively (Example 4).

Figure 8 represents the emission spectra of material 5 of example 5 (mOxi containing hybrid PMMA) under air (plain line) and $N_2$ saturated (dashed line) atmosphere.

Figure 9 represents the emission spectra of material 6 of Example 5 (Oxi containing hybrid PMMA) under air (plain line) and $N_2$ saturated (dashed line) atmosphere.

**Example 1 - Material 1 according to the first embodiment of the present invention-Copolymerisation of both emitters - integration in polydimethylsiloxane (PDMS) matrix - PDMShyb**

1. Preparation of $(Cat^+)_2[Mo_6I_8(OCOC_2F_5)_6]^{2-}$:

The polymerizable cluster is obtained in two steps starting from commercially available organic starting materials (for the organic cation salt precursor) and from M. Amela-Cortes, Y. Molard, S. Paofai, A. Desert, J.-L. Duvail, N. G. Naumov and S. Cordier, Dalton Trans., 2016, 45, 237-245 for the cluster precursor.

1.1 N,N-dimethyl-N-(undec-10-en-1-yl)dodecanammonium bromide (Cat+-Br):

The ammonium salt was obtained in one step reaction using 11-bromoundec-1-ene and N,N-dimethyldodecylamine (Scheme 1). 11-bromoundec-1-ene (1 g, 4.29 mmol) was dissolved in 25 mL of chloroform and added to a solution of N,N-dimethyldodecylamine (0.92 g, 4.29 mmol) in 25 mL of chloroform. To this mixture was added 50 mL of acetonitrile. The reaction media was stirred at 80 °C for 48 h. The solvent was evaporated and the product was dried under vacuum for one night. The desired ammonium compound was obtained as a yellowish viscous oil.

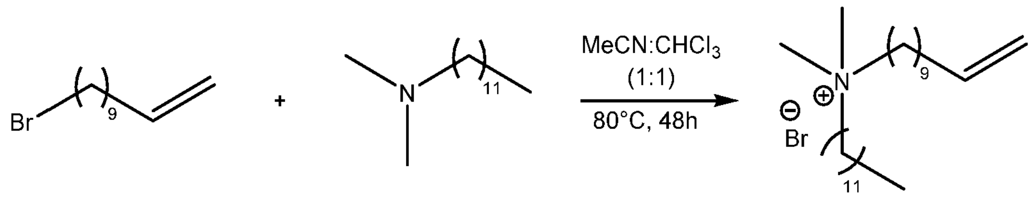


Synthesis scheme of *N*,*N*-dimethyl-*N*-(undec-10-en-1-yl)dodecanammonium bromide.

$^1$H-NMR (400 MHz, $CDCl_3$): 5.79 (m, 1H, $-CH_2-CH{=}C$), 4.97 (m, 1H, $-C{=}CHH$), 4.91 (m, 1H, $-C{=}CHH$), 3.55-3.44 (m, 4H, $-CH_2-N^+$), 3.40 (s, 6H, $CH_3-N^+$), 1.88-1.59 (m, 4H, $-CH_2-CH_2-N^+$), 1.44-1.16 (m, 32H, $-(CH_2)_9-$ and $-(CH_2)_7-$), 0.86 (t, 3H, $-CH_3$).

1.2 Preparation of $Cs_2Mo_6I_8(OCOC_2F_5)_6$ :

To a solution of $Cs_2Mo_6I_{14}$ (1.5 g, 0.52 mmol) in 20 mL of acetone, was added a solution of silver pentafluoropropionate (0.935 g, 3.42 mmol) in 10 mL of acetone under argon and in the dark. The mixture was stirred for 48 h in the dark and then was filtered through a Celite® pad. The red solution was then evaporated to yield a red-orange powder.

$$^{19}\text{F-NMR (acetone-d}_6\text{)}: \delta\ (\text{ppm}) = -83\ (3\text{F}), -120\ (2\text{F}).$$

Energy Dispersive X-Ray Analysis: Cs 2, Mo 8, I 11, F 77, no Ag.

1.3 $(Cat^+)_2[Mo_6I_8(OCOC_2F_5)_6]^{2-}$:

$Cs_2Mo_6I_8(OCOC_2F_5)_6$ (0.1 g, 0.035 mmol) was dissolved in 20 mL of acetone. To this solution was added (0.035 g, 0.070 mmol) of the synthetized cation (Cat+-Br) in 10 mL of acetone. The mixture was heated at 40 °C for 2

h. The solvent was evaporated and 20 mL of dichloromethane was added. The CsBr salt formed (white precipitate) was filtered off. Dichloromethane was evaporated under vacuum. The organic polymerizable cluster was obtained as a red viscous oil.

$^{1}$H-NMR (400 MHz, $CDCl_3$): 5.80 (m, 1H, $-CH_2$-C*H*=C), 4.99 (m, 1H, -C=C*H*H), 4.93 (m, 1H, -C=CH*H*), 3.34-3.24 (m, 4H, $-CH_2-N^+$), 3.17 (s, 6H, $CH_3-N^+$), 1.90-1.64 (m, 4H, $-CH_2-CH_2-N^+$), 1.44-1.17 (m, 32H, $-(CH_2)_9-$ and $-(CH_2)_7-$), 0.87 (t, 3H, $-CH_3$).
$^{19}$F-NMR (400 MHz, $CDCl_3$): -82.26 (s, 3F), -120.28 (s, 2F).

2. Preparation of the organic compound, 3- oxindole (Oxi):

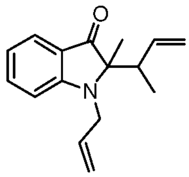

The 3-oxindole was prepared following the procedure reported in Hortense Lauwick, Yang Sun, Huriye Akdas-Kilig, Sylvien Dérien, and Mathieu Achard, Chem Eur. J, 2018, 24, 7964-7969.

3. Polymerization:

PHyb@PDMS or PDMSHyb- Material 1 :

0.5% wt. (weight %) of the 3-oxindole (Oxi) was dissolved in 60 % wt. of 1,3-divinyltetramethyldisiloxane monomer and 37.5% wt. of 2,4,6,8-tetramethylcyclotetrasiloxane crosslinker. To this mixture was added 2% wt. of the polymerizable cluster dissolved in 2 mL of dichloromethane. Then, 0.5 µL of Platinum(0)-1,3-divinyl-1,1,3,3-tetramethyldisiloxane complex solution in xylene (Pt -2%) was added such as catalyst. The reaction media was placed in an oven at 40°C for 2 days. A homogenous and transparent orange reticulated hybrid polymer was then obtained.

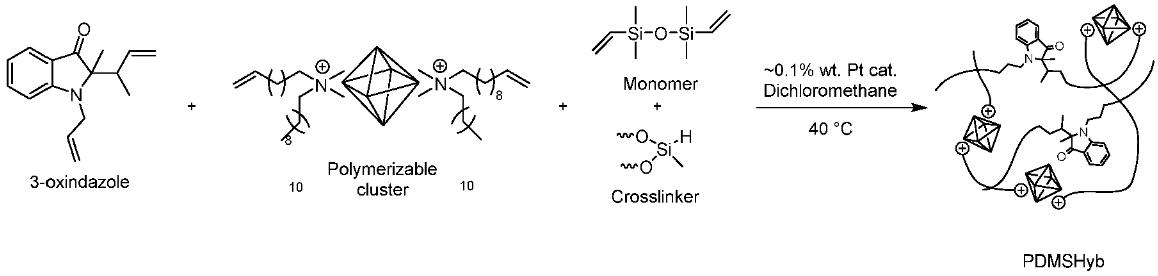


Synthetical scheme of Material 1 (PDMS hybrid derivative)

**Emission properties of Material 1:**

Figure 1 presents the emission spectra recorded during continuous irradiation in air of material 1 using an irradiation source made of a Nikon Hg intensilight and a 380nm-420nm optical filter, while figure 2 shows the evolution of emission maxima during this continuous irradiation.

Emission spectra are made of two bands one centred at around 470 nm corresponding to the emission of the Oxi organic fluorophore and a second less intense centred around 670 nm corresponding to the phosphorescence of the inorganic cluster that is highly sensitive to oxygen concentration. The metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507) reacts efficiently with triplet oxygen to generate the NIR emissive and reactive singlet oxygen. PDMS matrix presents a high gas permeability. As a result, the oxygen concentration in the material is nearly not modified even after a long irradiation time. In contrast to already published results for PU (M. Amela-Cortes, S. Paofai, S. Cordier, H. Folliot and Y. Molard, Chem. Commun.,

2015, 51, 8177-8180.), under irradiation, there is no noticeable in change of emission intensity but a change of emission color, which is easier to detect. The emission color can then be tuned by modifying the atmosphere of the hybrid. The same phenomenon, but much more pronounced is observed when a 405 nm laser diode is used to irradiate material 1 in air as depicted in Figure 3. In this case, the stronger irradiation allows a full and fastest consumption of the oxygen surrounding the cluster core leading to a large increase of its emission band. Meanwhile, the absence of oxygen allows an efficient energy transfer from the organic to the inorganic luminophore, thus lowering the Oxi emission signal.

This ability to modulate the intensity of the blue and red emission bands is also observed with the nature of the atmosphere. In fact, when material 1 is surrounded by air its AQY value is 0.062 while in a saturated $N_2$ atmosphere (i.e. in the lack of oxygen) this AQY largely increases up to 0.618. The change of color from blue-white in air to red in $N_2$ is instantaneous, reversible and can be used in $O_2$ sensor technologies.

**Example 2 - Material 2 according to the third embodiment of the present invention- Integration of metal cluster compound using PEGMA as comonomer and simple mixing (no polymerization) with the organic compound (3-oxindole (Oxi)) - PMMA-PEGMA/Oxy/$Cs_2Mo_6I_8(OCOC_2F_5)_6$**

1. Precursor of the polymer matrix PMMA-PEOMA copolymer :

According to M. Robin, N. Dumait, M. Amela-Cortes, C. Roiland, M. Harnois, E. Jacques, H. Folliot and Y. Molard, Chem. Eur. J., 2018, 24, 4825-4829.

PMMA-PEOMA copolymer containing 2 mol% of PEOMA was prepared according to the following procedure:

PEOMA (357mg (2mol%)) and freshly distilled methylmethacrylate (MMA) (1.88g, 2ml) were dissolved in 20ml of toluene. The solution was then degassed with argon during 15 min. After addition of 0.2wt% of azobisisobutyronitrile (AIBN) compared to MMA, the solution was heated at 80°C under argon atmosphere during 24 hours. Purification of the product was achieved by performing at least two precipitations in toluene/methanol solvents. The obtained precipitate was filtered, washed with methanol and dried using a rotaevaporator. The samples were obtained as white powder after drying under vacuum for 17h.

$^1$H- NMR (400 MHz, $CDCl_3$): 3.67 (s, 2H, $C_2H_4$-O-$CH_3$), 3.62 (s, 3H, COO-$CH_3$), 2.04 - 1.73 (m, 2H, $CH_2$), 0.96 (d, J = 68.7 Hz, 3H, C-$CH_3$).

2. Preparation of $Cs_2Mo_6I_8(OCOC_2F_5)_6$ : as disclosed in Example 1

3. Preparation of 3-oxindole Oxi: as disclosed in Example 1

4. PMMA-PEGMAHyb- Material 2:

PMMA-PEGMA 95.9 wt%, + $Cs_2Mo_6I_8(OCOC_2F_5)_6$ (3.6 wt%) + 3-oxindole Oxi (0.5 wt %).

All compounds were solubilized in dichloromethane. The solution was concentrated and drop casted to give a thin film after solvent evaporation.

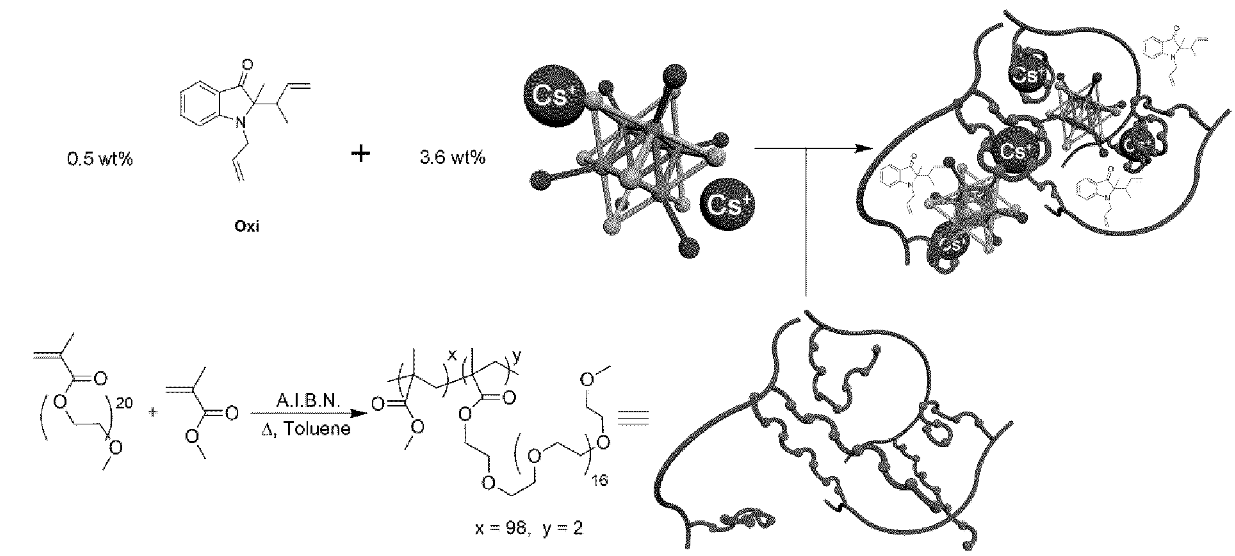

Synthetical scheme of material 2 (Mo6 and Oxi integration in a PMMA-PEGMA derivative)

**Emission properties of Material 2:**

As depicted in Figure 4, irradiating material 2 with a 405 nm laser beam leads to an increase of the cluster emission band and a decrease of the oxindole emission band. This phenomenon is due to the consumption of molecular oxygen within the polymer by the metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507). It allows to write directly on the polymer matrix using a 405 nm laser pointer. The writing can be revealed using a standard UV 2A lamp. Writing appears in red while the rest of the matrix emits in white. The gas permeability of the PMMA-PEGMA copolymer is moderate, therefore, the writing up fades in 5 minutes (for a full disappearance) with a 5 mW 405 nm laser pointer.

Calculated Emission lifetime shows that as expected the fluorescence of Oxi is poorly affected by the change of atmosphere. The cluster phosphorescence lifetime increases in the lack of oxygen. As presented for example 1 and 2, saturating the atmosphere with $N_2$ induces a full emission capacity of metal cluster (no oxygen quenching) which in turn leads to a large increase of the emission AQY of material 2.

Emission life time at room temperature and AQY ($\lambda_{exc.}$ = 375 nm).

| Emission lifetime | | | | AQY | |
|---|---|---|---|---|---|
| Air | | vacuum | | Air | $N_2$ |
| Fluo. (392-528 nm) | Phospho. (602-738 nm) | Fluo. (392-528 nm) | Phospho. (602-738 nm) | | |
| 8.64 ns (2950)<br>3.30 ns (7180)<br>0.99 ns (4630) | 150 μs (6000)<br>61 μs (20150) | 8.23 ns (3320)<br>3.29 ns (9600)<br>0.93 ns (6020) | 225 μs | 0.091 | 0.277 |

**Example 3: Material 3 according to the fourth embodiment of the present invention- Copolymerization of the metal cluster compound and simple mixing (no polymerization) with the organic compound (3-oxindole (Oxi))**

1. Preparation of the polymerizable cluster:

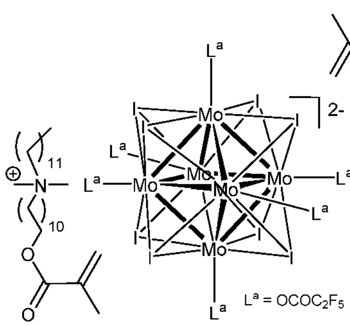

The polymerizable cluster is obtained according to M. Amela-Cortes, Y. Molard, S. Paofai, A. Desert, J.-L. Duvail, N. G. Naumov and S. Cordier, Dalton Trans., 2016, 45, 237-245.

2. Preparation of 3-oxindole Oxi: as disclosed in Example 1

3. Preparation of PMMAHyb-Material 3:

$\mathbf{P_{hyb.}}$ (**Material 3**) 0.5% wt. of 3-oxindazole or 3-oxindole and 2% wt. of the polymerizable cluster was dissolved in 97.3% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent reddish polymer pellet was obtained.

$^1$H- NMR (500 MHz, $(CD_3)_2CO$): 3.63 (s, 3H, $CH_3$-O), 2.03-1.44 (m, 2H, -$CH_2$-), 1.43-0.70 (m, 3H, $\alpha$-$CH_3$-).

$^{19}$F- NMR (470 MHz, $(CD_3)_2CO$): -82.98 (t, 3F), -120.63 (m, 2F).

**$P_{Oxi}$.** 0.5% wt. of the 3-oxindole was dissolved in 99.3% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent polymer pellet was obtained.

$^1$H-NMR (500 MHz, $(CD_3)_2CO$): 3.63 (s, 3H, $CH_3$-O), 2.03-1.44 (m, 2H, -$CH_2$-), 1.43-0.70 (m, 3H, $\alpha$-$CH_3$-).

**$P_{Mo}$.** 2% wt. of the polymerizable cluster was dissolved in 97.8% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent reddish polymer pellet was obtained.

$^1$H- NMR (500 MHz, $(CD_3)_2CO$): 3.62 (s, 3H, $CH_3$-O), 2.03-1.40 (m, 2H, -$CH_2$-), 1.40-0.69 (m, 3H, $\alpha$-$CH_3$-).

$^{19}$F- NMR (470 MHz, $(CD_3)_2CO$): -82.98 (t, 3F), -120.63 (m, 2F).

Thin films were obtained by slow evaporation of chloroform solution containing the hybrid.

**Emission properties of material 3:**

Figure 5 shows the normalized emission spectra of material 3 before (plain line) and after (dashed line) 20 s of UV irradiation with a 405 nm laser diode. While the Oxi and metal cluster emission maxima are nearly at the same level before irradiation leading to a material that emits in white, the Oxi blue fluorescence band diminishes strongly upon irradiation. Therefore, the emission color goes from white to red upon irradiation. This phenomenon originates from i) the consumption of molecular oxygen within the polymer by the metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507), and ii) from a resonant energy transfer occurring from the Oxi emitter to the metal cluster. Due to the low permeability of the PMMA matrix, this change of color is persistent during a lap of time that depends on the irradiation strength. Therefore, this matrix is suitable to write evanescent messages and to store informations for tailored time frames that can vary from several minutes up to several days. The same phenomenon is observed when the material is placed in a controlled atmosphere: passing from air to a $N_2$ saturated atmosphere leads to the same behaviour of luminophores emission bands and to an increase of the AQY from 0.05 to 0.16 upon excitation at 375 nm.

The following table presents kinetic parameters and quantum yields of samples containing Oxi ($P_{oxi}$), the metal cluster ($P_{Mo}$) and both luminophores at the same concentration ($P_{hyb}$).

Photophysical data (F: fluorescence, Ph: phosphorescence, average lifetimes and absolute quantum yield) recorded on thin films.

| | average lifetimes | | | | | | | | AQY ($\lambda_{exc}$ = 365 nm) | |
|---|---|---|---|---|---|---|---|---|---|---|
| | 300 K | | | | | 77K | | | 300 K | |
| | Air | | Vacuum | | | Vacuum | | | Air | $N_2$ |
| | $F_{oxi}$[a] | $Ph_{Mo}$[b] | $F_{oxi}$[a] | $Ph_{oxi}$[a] | $Ph_{Mo}$[b] | $F_{oxi}$[a] | $Ph_{oxi}$[a] | $Ph_{Mo}$[b] | | |
| $P_{hyb}$ | 5.9 ns | 31.6 $\mu$s | 14.4 ns | 6.3 ms | 277 $\mu$s | 18.7 ns | 400 ms | 486 $\mu$s | 0.13 | 0.38 |
| $P_{oxi}$ | 5.9 ns | - | 15.4 ns | 7.9 ms | - | 17.2 ns | 533 ms | - | 0.06 | 0.06 |
| $P_{Mo}$ | - | 52.2 $\mu$s | - | - | 222 $\mu$s | - | - | 295 $\mu$s | 0.10 | 0.37 |

[a] Integration area= 450-548nm; [b]integration area : 612-748nm

The resonant energy transfer from Oxi to the metal cluster is best shown at 77K under vacuum by time correlated emission studies as the phosphorescence of the Oxi derivative is not detected at room temperature in air. This is due to a temperature assisted deactivation of its triplet state, a dominant phenomenon at room temperature and to its reactivity with oxygen. At 77K, the phosphorescence lifetime of the oxi derivatives diminishes in presence of metal cluster while the metal cluster lifetime increases largely upon addition of Oxi in its host matrix, evidencing the resonant energy transfer.

**Example 4: Material 4 according to the seven embodiment of the present invention- Hybrid based on a Cellulose Acetate Phthalate (CAP) host - Simple mixing of both emitters and polymer:**

1. Preparation of the 3-oxindole :

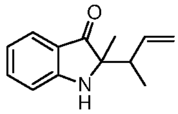

The 3-oxindole (monofunctionalised, (mOxi)) was prepared following the procedure reported in Hortense Lauwick, Yang Sun, Huriye Akdas-Kilig, Sylvien Dérien, and Mathieu Achard, Chem Eur. J, 2018, 24, 7964-7969

2. Preparation of $Cs_2Mo_6I_8(OCOC_2F_5)_6$ : As described in Example 1

3. Preparation of CAPHyb- material 4 :

Cellulose Acetate Phthalate (CAP) (2g, CAS:9004-38-0), $Cs_2Mo_6I_8(OCOC_2F_5)_6$ (90 mg, 4 wt%) and mOxi (10mg, 0.5 wt%) were solubilized in 20 ml of acetone. The solution was stirred for 10 minutes to allow a good solubilisation of all compounds and then poured in a petri dish. The solution was slowly evaporated leading to a hybrid luminescent and homogeneous film.

0.5 wt% 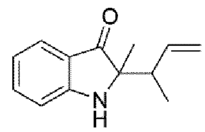 + 4 wt% 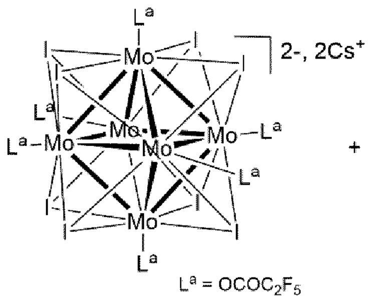 +  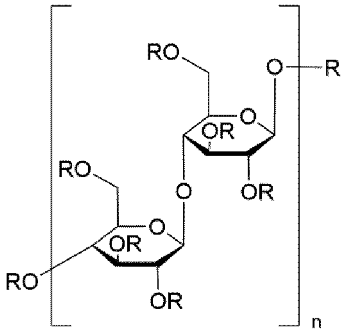

$L^a = OCOC_2F_5$

R = H or 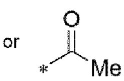 or 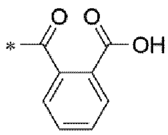

Schematic representation of both emitters and Cellulose Acetate Phthalate for material 4

The homogeneity of the sample is assessed by weak interactions between CAP carbonyl functions and the $Cs_2Mo_6I_8(OCOC_2F_5)_6$ as shown by Figure 7. Infrared spectra of neat CAP, $Cs_2Mo_6I_8(OCOC_2F_5)_6$ and $Cs_2Mo_6I_8(OCOC_2F_5)_6$ @CAP films show that the C=O stretching band corresponding to the CAP acetate and phthalate groups undergoes a huge shift to lower energy from 1727 $cm^{-1}$ to 1674 $cm^{-1}$ as soon as 1 wt % of $Cs_2Mo_6I_8(OCOC_2F_5)_6$ is introduced.

**Emission properties of material 4 :**

Emission properties of material 4 are very similar to those of material 3. As depicted by figure 6, saturating the atmosphere of material 4 with $N_2$ leads to an increase of the cluster emission and thus to a change of the emission color as well as a change of the material AQY that increases from 0.17 in air to 0.36 under $N_2$. From the lifetime point of view, this lack of $O_2$ induces the disappearance of the longest fluorescence lifetime component of the organic emitter and a large increase of the cluster phosphorescence lifetime that might be indicative of a slight resonant energy transfer between both emitters although the intensity modulation of the Oxi band is not as important as observed for material 3.

Life time at room temperature and AQY ($\lambda_{exc.}$ = 375 nm).

| Emission lifetime | | | | AQY | |
|---|---|---|---|---|---|
| Air | | vacuum | | Air | $N_2$ |
| Fluo. (392-528 nm) | Phospho. (602-738 nm) | Fluo. (392-528 nm) | Phospho. (602-738 nm) | | |
| 9.7 ns (0.29)<br>4.7 ns (0.11)<br>1.65 ns (0.60) | 98 μs (0.51)<br>46 μs (0.49) | 5.9 ns (0.08)<br>1.62 (0.92) | 174 μs (0.69)<br>54μs (0.31) | 0.17 | 0.36 |

**Example 5 : Materials 5 and 6 according to the seven embodiment of the present invention- Hybrid based on a PMMA host - Simple mixing of both emitters and polymer**

1. Preparation of the 3-oxindoles :

- mOxi monofunctionnalised oxindole : The same as in Example 4
- Oxi : difunctionnalised oxindole : The same as in Example 1

2. Preparation of $Cs_2Mo_6I_8(OCOC_2F_5)_6$ : As described in Example 1

3. Preparation of materials 5 and 6:

Commercial PMMA (Mw=30000g.mol-1, 2g), $Cs_2Mo_6I_8(OCOC_2F_5)_6$ (45 mg, 2 wt%) and mOxi (10mg, 0.5 wt%) or Oxi (10mg, 0.5 wt%) were solubilized in a mixture of dichloromethane and tetrahydrofurane (20 ml). The solution was stirred for 10 minutes and sonicated for 5 minutes to allow the solubilisation of all compounds (clear solution) and then poured in a petri dish. The solvents were slowly evaporated leading to a hybrid luminescent and homogeneous film.

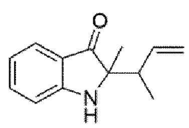
mOxi

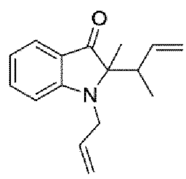
Oxi

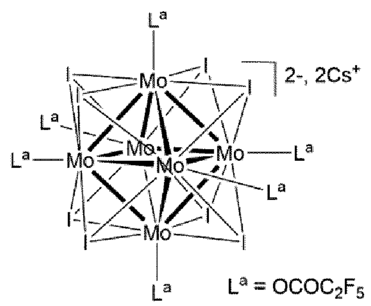
$Cs_2Mo_6I_8(OCOC_2F_5)_6$

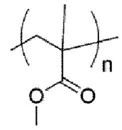
PMMA

Schematic representation of luminophores and PMMA for materials 5 and 6

**Emission properties of materials 5 and 6:**

Figures 8 and 9 present respectively the emission spectra under air (plain line) and $N_2$ saturated atmosphere (dashed line) of material 5 and 6 thin films, respectively.

Here, the Oxi blue band emission is not sensitive to a change of atmosphere which might be interpreted as an independent behaviour of both luminophores in the host matrix (no energy transfer). However, the same behaviour is observed that is a large increase of the cluster emission band intensity upon $N_2$ atmosphere saturation leading to a drastic color change of the hybrid matrix upon UV irradiation with a classic UV-2A tube, and a large increase of the AQY values as depicted in the following table. The same phenomenon is observed when samples are sufficiently irradiated with UV light so that the $O_2$ molecules surrounding metal clusters within the host matrix are consumed. Hence, due to the low permeability of the PMMA matrix, this change of color is persistent during a lap of time that depends on the irradiation strength. Therefore, these matrices are suitable to write evanescent messages and to store information for tailored time frames that can varies from several minutes up to several days.

| | AQY ($\lambda_{exc.}$ = 375 nm) | |
|---|---|---|
| | Air | $N_2$ |
| mOxi Material 5 | 0.08 | 0.22 |
| Oxi Material 6 | 0.08 | 0.43 |

## Claims

**1.** A material comprising a polymer matrix functionalized with:

- an organic compound comprising a moiety of formula

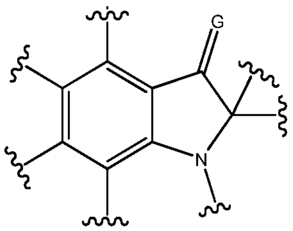

wherein G is :

- oxygen;
- sulfur;
- $NR^a$, $N^{(+)}R^aR^b$ with $R^a$ and $R^b$ are each independently H, $C_1$-$C_{18}$ alkyl, aryl or heteroaryl;
- CH-(EWG) C-$(EWG)_2$ or ($EWG^1$)-C-($EWG^2$) with EWG, $EWG^1$, $EWG^2$ being an electron withdrawing group (such as nitrile (-C=N); ketone (C=O)-$R^c$; (ester (-(C=O)-$OR^c$) with $R^c$ selected from H, $C_1$-$C_{18}$ alkyl, aryl and heteroaryl; aryl or heteroaryl (such as pyridinyl and pyrimidinyl));
- preferably oxygen;

- and a metal cluster compound comprising a moiety of formula $[M_6Q^i_8L^a_6]^{d-}$
wherein:

- M represents molybdenum (Mo), tungsten (W), rhenium (Re), or a mixture thereof, preferably Mo or W;
- Q' is an inner ligand and represents a halogen or a chalcogen atom, preferably a halogen atom, or a mixture thereof; and
- $L^a$ is an apical ligand and represents a halogen atom, an organic ligand or a mixture thereof
- d ranges from -4 to + 4, preferably 2 to 4, more preferably 2.

wherein said organic compound and metal cluster compound are independently:

Linked to the polymer matrix by

- Covalent bond
- Electrostatic interaction
- Supramolecular interaction
- Complexation / adsorption

and/ or
dispersed within the polymer matrix (admixture/ embedded).

**2.** The material according to claim 1, wherein

- M represents molybdenum (Mo), tungsten (W), rhenium (Re), or a mixture thereof, preferably Mo or W, more preferably Mo;
- $Q^i$ represents Cl, Br, I, S, Se or a mixture thereof, preferably Cl, Br or I; and
- $L^a$ represents Cl, Br, I, CN, SCN, a carboxylate or a mixture thereof, preferably Cl, Br, I, a $C_3F_7COO$ or a $C_2F_5COO$ group.

**3.** The material according to claim 1 or 2, wherein said material is obtained by polymerizing the organic compound, the metal cluster compound and a precursor of the polymer matrix;
wherein the metal cluster compound and the organic compound are copolymerized with the precursor of the polymer matrix;

- the organic compound is represented by formula:

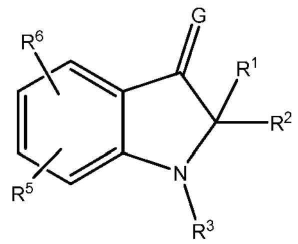

wherein:

G is as defined above,
$R^1$ and $R^2$ are each independently selected from alkyl, aryl, alkenyl (such as allyl), alkynyl (such as propargyl), $-O-C(=O)-CH=CH_2$, $-O-C(=O)-C(CH_3)=CH_2$, and - L-Pol,
$R^1$ and $R^2$ may form together a cycloalkyl,
$R^3$ is selected from H, alkyl, -C=Oalkyl, C=Oaryl, $-CO_2$alkyl, $CO_2$aryl, $-SO_2$alkyl, $-SO_2$aryl, alkenyl, alkynyl (such as propargyl),$-O-C(=O)-CH=CH_2$, $-O-C(=O)-C(CH_3)=CH_2$,-L-Pol and $-SiY^1Y^2Y^3$ wherein $Y^1$, $Y^2$ and $Y^3$ are each independently selected from H, alkyl, alkoxy, cycloalkyl, aryl, aryloxy and aralkyl (for example $-SiY^1Y^2Y^3$ is $-Si(CH_3)_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate $-SCF_3$), $-O-C(=O)-CH=CH_2$, $-O-C(=O)-C(CH_3)=CH_2$ or-L-Pol,
With the proviso that at least one of $R^1$, $R^2$, $R^3$, $R^5$ or $R^6$ is -L-Pol, L being a linker having from 1 to 30 methylene groups optionally interrupted by one of more atoms or groups of atoms chosen from the group consisting of aromatic rings, -O-, -CO- , -S-, -CH=CH-, -C = C-, -COO-, -OC(O)-, -CH=N-, -C(O)NH, -N=N-, -NH-CO- and mixtures thereof, Pol being a polymerizable group;

- the metal cluster compound is represented by formula $X^+_d[M_6Q^i_8L^a_6]^{d-}$ wherein $[M_6Q^i_8L^a_6]^{d-}$ is as defined above and X is an organic counter cation, said organic counter cation containing a cationic head substituted by at least one substituent including a polymerizable group and having the following formula $(L1)_m$-Cat-$(L2)_n$-Pol,

wherein

L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, - OC(O)-, -CH=N-, -C(O)NH, -N=N-, -NH-CO- and mixtures thereof m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group.

**4.** The material according to claim 1 or 2, wherein said material is obtained by:

(i) polymerizing a precursor of the polymer matrix and the organic compound in a solvent containing the dissolved metal cluster compound and evaporating the solvent; or
(ii) polymerizing a precursor of the polymer matrix and the organic compound, dipping said resulting polymer

in a solvent containing the dissolved metal cluster compound and evaporating the solvent;

wherein the organic compound is copolymerized with the precursor of the polymer matrix;

- said precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units;
- the organic compound is represented by the formula:

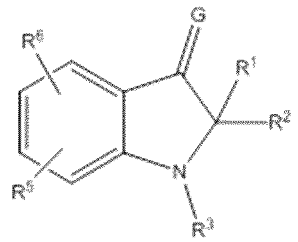

G is as defined above,
$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$ and -L-Pol,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, -O-C(=O)-C($CH_3$)=$CH_2$ , -L-Pol and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si$(CH_3)_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$ or -L-Pol,
With the proviso that at least one $R^1$, $R^2$, $R^3$, $R^5$ or $R^6$ is L-Pol, L being a linker having from 1 to 30 methylene groups optionally interrupted by one of more atoms or groups of atoms chosen from the group consisting of aromatic rings, -O-, -CO- , -S-, -CH=CH-, -C = C-, -COO-, -OC(O)-, -CH=N-, -C(O)NH, -N=N-, -NH-CO- and mixtures thereof, Pol being a polymerizable group which reacts with the precursor of the polymer matrix;

- the metal cluster compound is represented by formula $X^+_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, K, Na, Li, $H_3O$, $(nC_4H_9)_4N$ and $NH_4$, more preferably Cs.

**5.** The material according to claim 1 or 2, wherein said material is obtained by:

(i) polymerizing a precursor of the polymer matrix in a solvent containing the dissolved organic compound and metal cluster compound, and evaporating the solvent; or
(ii) polymerizing a precursor of the polymer matrix, dipping the resulting polymer in a solvent containing the dissolved organic compound and metal cluster compound and evaporating the solvent;

wherein

- the organic compound is represented by formula

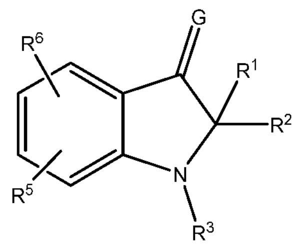

G is as defined above,
$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, -O-C(=O)-C($CH_3$)=$CH_2$ and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si($CH_3$)$_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$,

- the metal cluster compound is represented by formula $X^+_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, Na, K, Li, $H_3O$, $(nC_4H_9)_4N$ and $NH_4$, more preferably Cs,
- said precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units.

**6.** The material according to claim 1 or 2, wherein said material is obtained by:

(i) polymerizing a precursor of the polymer matrix and the metal cluster compound in a solvent containing the dissolved organic compound and evaporating the solvent; or
(ii) polymerizing a precursor of the polymer matrix and the metal cluster, dipping said resulting polymer in a solvent containing the dissolved organic compound and evaporating the solvent;

wherein the metal cluster is copolymerized with the precursor of the polymer matrix;

- the organic compound is represented by formula:

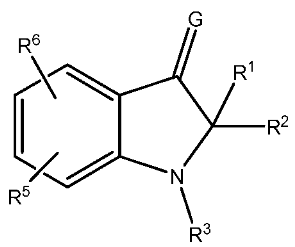

wherein:

G is as defined above,
$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, and -O-C(=O)-C($CH_3$)=$CH_2$ and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si($CH_3$)$_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, or-O-C(=O)-C($CH_3$)=$CH_2$,

- the metal cluster compound is represented by formula $X^+_d[M_6Q^i_8L^a_6]^{d-}$ wherein $[M_6Q^i_8L^a_6]^{d-}$ is as defined above and X is an organic counter cation containing a cationic head substituted by at least one substituent including a polymerizable group and having the following formula $(L1)_m$-Cat-$(L2)_n$-Pol,

wherein

L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, - OC(O)-, -CH=N-, -C(O)NH, -N=N-, -NH-CO- and mixtures thereof,
m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group

**7.** The material according to claim 1 or 2, wherein said material is obtained by reacting the organic compound and the metal cluster compound to form a salt, and polymerizing a precursor of the polymer matrix and the salt;

- the organic compound is represented by formula:

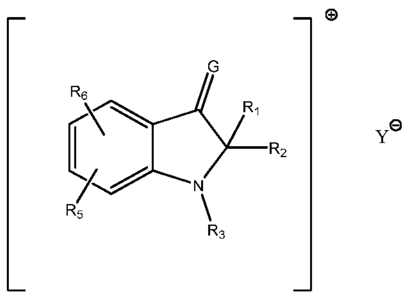

wherein:

G is as defined above,
$R^1$ and $R^2$ are each independently selected from alkyl, aryl, alkenyl, alkynyl (such as propargyl),-O-C(=O)-CH=$CH_2$, -O-C(=O)-C($CH_3$)=$CH_2$, $-(L3)_p-(Cat)_r-(L4)_q-(Pol)_s$, $-(L3)_p-(Pol)_r-(L4)_q-(Cat)_s$,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, -O-C(=O)-C($CH_3$)=$CH_2$, $-(L3)_p-(Cat)_r-(L4)_q-(Pol)_s$, $-(L3)_p-(Pol)_r-(L4)_q-(Cat)_s$ and - $SiY^1Y^2Y^3$ wherein $Y^1$, $Y^2$ and $Y^3$ are each independently selected from H, alkyl, alkoxy, cycloalkyl, aryl, aryloxy and aralkyl (for example -$SiY^1Y^2Y^3$ is - $Si(CH_3)_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$, $-(L3)_p-(Cat)_r-(L4)_q-(Pol)_s$, $-(L3)_p-(Pol)_r-(L4)_q-(Cat)_s$,
wherein
L3 and L4 are each independently linkers having from 1 to 30 methylene groups, optionally interrupted by one of more atoms or groups of atoms chosen from the group consisting of aromatic rings, -O-, -CO-, -S-, -CH=CH-, -C = C-, -COO-, - OC(O)-, -CH=N-, -C(O)NH, -N=N-, -NH-CO- and mixtures thereof,
p and q independently 0 or 1,
Cat is a cationic group, preferably selected from imidazolium, a pyridinium, a pyrolidinium, an ammonium, a phosphonium, a hydroxyphosphonium and a sulfonium, Pol is a polymerisable group,
r and s independently 0 or 1,
With the proviso that at least one of $R^1$, $R^2$, $R^3$, $R^5$ or $R^6$ is $-(L3)_p-(Cat)_r-(L4)_q-(Pol)_s$, or $-(L3)_p-(Pol)_r-(L4)_q-(Cat)_s$,

- the metal cluster compound is represented by formula $X^+_d[M_6Q^i_8L^a_6]^{d-}$ wherein $[M_6Q^i_8L^a_6]^{d-}$ is as defined above and X is an counter cation chosen from the group consisting of alkali metal cation, hydronium, and an ammonium, preferably chosen between Cs, K, $H_3O$, $(nC_4H_9)_4N$ and $NH_4$, more preferably Cs,
- The salt is represented by formula:

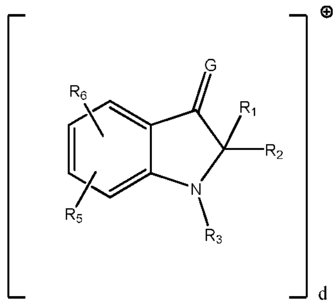

$[M_6Q^i_8L^a_6]^{d\ominus}$

**8.** The material according to claim 1 or 2, wherein said material is obtained by:

(i) reacting the organic compound and the metal cluster compound to form a complex and polymerizing a precursor of the polymer matrix and the complex in a solvent and evaporating the solvent or
ii) polymerizing a precursor of the polymer matrix and the organic compound, dipping said resulting polymer in a solvent containing the dissolved metal cluster compound and evaporating the solvent

wherein the organic compound is copolymerized with the precursor of the polymer matrix;

- the organic compound is represented by formula:

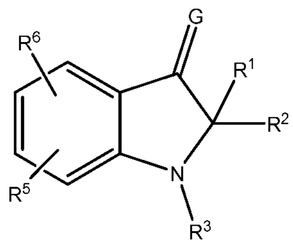

wherein:

G is as defined above,
$R^1$ and $R^2$ are each independently selected from alkyl, aryl, alkenyl, alkynyl (such as propargyl), , -O-C(=O)-CH=$CH_2$, -O-C(=O)-C($CH_3$)=$CH_2$, -L6-Pol, -L7-Cycle, -L8-PEO, -L9-PEO-L10- Pol, and -L11-Cycle-L12-Pol,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, -O-C(=O)-C($CH_3$)=$CH_2$, -L6-Pol, -L7-Cycle, -L8-PEO, -L9-PEO-L10-Pol, -L11-Cycle-L12-Pol and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example - Si$Y^1Y^2Y^3$ is -Si$(CH_3)_3$),
$R^5$ and $R^6$ represent each independently H, alkyl, aryl, heteroaryl, hydroxyl, amino, halo, haloalkyl such as trifluoromethyl, haloalkylthio such as perhaloalkylthio groups such as trifluoromethylthiolate -SCF3, -O-C(=O)-CH=$CH_2$, -O-C(=O)-C($CH_3$)=$CH_2$, -L6-Pol, -L7-Cycle, -L8-PEO, -L9-PEO-L10-Pol, or -L11-Cycle-L12-Pol,
L6, L7, L8, L9, L10, L11 and L12 are each independently linkers having from 1 to 30 methylene groups, optionally interrupted by one of more atoms or groups of atoms chosen from the group consisting of aromatic rings, -O-, -CO-, -S-, - CH=CH-, -C = C-, -COO-, -OC(O)-, -CH=N-, -C(O)NH, -N=N-, -NH-CO- and mixtures thereof,
Cycle being a cyclic ether comprising 12 to 21 ring atoms at least 4 ethylene oxide units and optionally interrupted by one or more nitrogen atoms,
PEO being a chain comprising at least 4 ethylene oxide units and optionally interrupted by one or more nitrogen atoms,
And with the proviso that

(i) at least one of $R^1$, $R^2$, $R^3$, $R^5$ or $R^6$ is -L6-Pol and at least one of $R^1$, $R^2$, $R^3$, $R^5$ or $R^6$ is -L7-Cycle or -L8-PEO

or

(ii) at least one of $R^1$, $R^2$, $R^3$, $R^5$ or $R^6$ is -L9-PEO- L10- Pol, -L11-Cycle- L12-Pol

- the metal cluster compound is represented by formula $X'_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, Na, K, Li, $H_3O$, $(nC_4H_9)_4N$ and $NH_4$, more preferably Cs.

**9.** The material according to claim 1 or 2, wherein said material is obtained by solubilizing in a solvent the polymer matrix, the organic compound and the metal cluster compound and evaporating the solvent, wherein :

- the organic compound is represented by formula

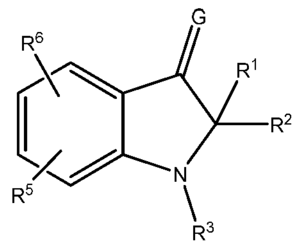

G is as defined above,
$R^1$ and $R^2$ are each independently selected from alkyl, aryl, alkenyl, alkynyl (such as propargyl), -O-C(=O)-CH=$CH_2$, -O-C(=O)-C($CH_3$)=$CH_2$,
$R^1$ and $R^2$ may form together a cycloalkyl,
$R^3$ is selected from H, alkyl, -C=Oalkyl, C=Oaryl, -$CO_2$alkyl, $CO_2$aryl, -$SO_2$alkyl, -$SO_2$aryl, alkenyl, alkynyl (such as propargyl), -O-C(=O)-CH=$CH_2$, -O-C(=O)-C($CH_3$)=$CH_2$ and -Si$Y^1Y^2Y^3$ wherein $Y^1$, $Y^2$ and $Y^3$ are each independently selected from H, alkyl, alkoxy, cycloalkyl, aryl, aryloxy and aralkyl (for example -Si$Y^1Y^2Y^3$ is -Si$(CH_3)_3$),
$R^5$ and $R^6$ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -$SCF_3$), -O-C(=O)-CH=$CH_2$, -O-C(=O)-C($CH_3$)=$CH_2$,

- the metal cluster compound is represented by formula $X'_d[M_6Q^i_8L^a_6]^{d-}$ wherein $[M_6Q^i_8L^a_6]^{d-}$ is as defined above and X is a counter cation chosen from the group consisting of alkali metal cation, hydronium, and an ammonium, preferably chosen between Cs, Na, K, Li, $H_3O$, $(nC_4H_9)_4N$ or $NH_4$, more preferably Cs.

**10.** The material according to any one of claims 1 to 9, wherein the polymer-matrix is selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyester such as polyethylene naphtalate, polyethylene terephthalate,polylactic acid (PLA), poly(lactic-co-glycolic)acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose and hydroxyalkylcellulose such as ethoxycellulose, preferably polymethylmethacrylate (PMMA) or polydimethylsiloxane (PDMS) or cellulose acetate phthalate (CAP), more preferably polymethylmethacrylate (PMMA).

**11.** The material according to any one of claims 1 to 9, wherein said polymer matrix is selected from the group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof.

**12.** The material according to any one of claims 1 to 11, wherein the polymerizable group Pol is a group comprising a function chosen from the group consisting of: carbon-carbon double bond, carbon-carbon triple bond, an azide function, a (meth)acrylate function, acrylate function, an amine function, a carboxylic function, an aldehyde function,

a hydroxyl function, an alkoxy function, an iodine atom, a bromine atom and a chlorine atom; more preferably a function chosen from the group consisting of an acrylate function (-O-C(=O)-CH=$CH_2$), a methacrylate function (-O-C(=O)-C($CH_3$)=$CH_2$), a carbon-carbon double bond and carbon-carbon triple bond.

**13.** Use of the material according to any one of claims 1 to 12 for data recording, data storage, sensing, anticounterfeiting, optoelectronics or theranostic applications.

**14.** Use of the material according to any one of claims 1 to 12 in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.

**Patentansprüche**

**1.** Material, umfassend eine Polymermatrix, die mit Folgendem funktionalisiert ist:

- einer organischen Verbindung, umfassend einen Teil einer Formel

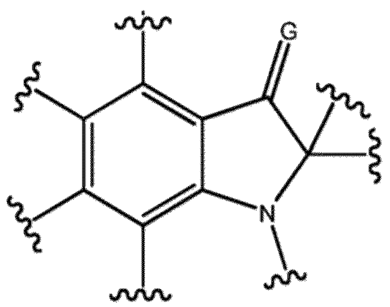

wobei G:

- Sauerstoff;
- Schwefel;
- $NR^a$, $N^{(+)}R^aR^b$, wobei $R^a$ und $R^b$ jeweils unabhängig H, $C_1$-$C_{18}$-Alkyl, Aryl oder Heteroaryl sind;
- CH-(EWG) C-$(EWG)_2$ oder ($EWG^1$)-C-($EWG^2$), wobei EWG, $EWG^1$, $EWG^2$ eine elektronenziehende Gruppe sind (wie Nitril (-C≡N); Keton (C=O)-$R^C$; (Ester (-(C=O)-$OR^c$), wobei $R^c$ ausgewählt ist aus H, $C_1$-$C_{18}$-Alkyl, Aryl und Heteroaryl; Aryl oder Heteroaryl (wie Pyridinyl und Pyrimidinyl));
- vorzugsweise Sauerstoff;

ist;
- und einer Metallclusterverbindung, umfassend einen Teil einer Formel $[M_6Q^i_8L^a_6]^{d-}$, wobei:

- M Molybdän (Mo), Wolfram (W), Rhenium (Re) oder eine Mischung davon, vorzugsweise Mo oder W, darstellt;
- $Q^i$ ein innerer Ligand ist und ein Halogen- oder ein Chalkogenatom, vorzugsweise ein Halogenatom oder eine Mischung davon, darstellt; und
- $L^a$ ein apikaler Ligand ist und ein Halogenatom, einen organischen Liganden oder eine Mischung davon, darstellt
- d im Bereich von -4 bis + 4, vorzugsweise 2 bis 4, besonders bevorzugt 2, liegt,

wobei die organische Verbindung und die Metallclusterverbindung unabhängig:

Verbunden sind mit der Polymermatrix durch:

- Kovalente Bindung
- Elektrostatische Wechselwirkung
- Supramolekulare Wechselwirkung
- Komplexierung/Adsorption

und/oder
dispergiert sind innerhalb der Polymermatrix (Beimischung/eingebettet).

**2.** Material nach Anspruch 1, wobei

- M Molybdän (Mo), Wolfram (W), Rhenium (Re) oder eine Mischung davon, vorzugsweise Mo oder W, besonders bevorzugt Mo, darstellt;
- $Q^i$ Cl, Br, I, S, Se oder eine Mischung davon, vorzugsweise Cl, Br oder I, darstellt; und
- $L^a$ Cl, Br, I, CN, SCN, ein Carboxylat oder eine Mischung davon, vorzugsweise Cl, Br, I, eine $C_3F_7COO$- oder eine $C_2F_5COO$-Gruppe, darstellt.

**3.** Material nach Anspruch 1 oder 2, wobei das Material durch Polymerisieren der organischen Verbindung, der Metallclusterverbindung und eines Vorläufers der Polymermatrix erhalten wird;
wobei die Metallclusterverbindung und die organische Verbindung mit dem Vorläufer der Polymermatrix copolymerisiert sind;

- die organische Verbindung durch die folgende Formel dargestellt wird:

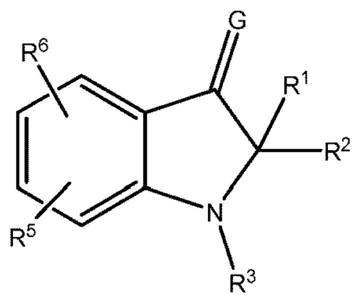

wobei:

G wie oben definiert ist,
$R^1$ und $R^2$ jeweils unabhängig ausgewählt sind aus Alkyl, Aryl, Alkenyl (wie Allyl), Alkinyl (wie Propargyl), $-O-C(=O)-CH=CH_2$, $-O-C(=O)-C(CH_3)=CH_2$ und -L-Pol,
$R^1$ und $R^2$ zusammen ein Cycloalkyl bilden können,
$R^3$ ausgewählt ist aus H, Alkyl, -C=OAlkyl, C=OAryl, $-CO_2$Alkyl, $CO_2$Aryl, $-SO_2$Alkyl, $-SO_2$Aryl, Alkenyl, Alkinyl (wie Propargyl),$-O-C(=O)-CH=CH_2$, $-O-C(=O)-C(CH_3)=CH_2$, -L-Pol und $-SiY^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel $-SiY^1Y^2Y^3$ $-Si(CH_3)_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen wie Trifluormethylthiolat $-SCF_3$), $-O-C(=O)-CH=CH_2$, $-O-C(=O)-C(CH_3)=CH_2$ oder -L-Pol, darstellen,
Mit der Maßgabe, dass mindestens einer von $R^1$, $R^2$, $R^3$, $R^5$ oder $R^6$ -L-Pol ist, wobei L ein Linker mit 1 bis 30 Methylengruppen ist, die gegebenenfalls durch ein oder mehrere Atome oder Atomgruppen, ausgewählt aus der Gruppe bestehend aus aromatischen Ringen, -O-, -CO-, -S-, -CH=CH-, -C≡C-, -COO-, -OC(O)-, -CH=N-, -C(O)NH, -N=N-, -NH-CO- und Mischungen davon, unterbrochen sind, wobei Pol eine polymerisierbare Gruppe ist,

- die Metallclusterverbindung durch Formel $X^+_d[M_6Q^i_8L^a_6]^{d-}$ dargestellt wird, wobei $[M_6Q^i_8L^a_6]^{d-}$ wie oben definiert ist und X ein organisches Gegenkation ist, wobei das organische Gegenkation einen kationischen Kopf enthält, der durch mindestens einen Substituenten, umfassend eine polymerisierbare Gruppe, substituiert ist und die folgende Formel $(L1)_{m}$-Cat-$(L2)_n$-Pol aufweist,

wobei

L1 und L2 jeweils unabhängig Linker mit 1 bis 30 Methylengruppen sind, die gegebenenfalls durch ein oder mehrere Atome oder Atomgruppen, ausgewählt aus der Gruppe bestehend aus aromatischen Ringen, -O-, -CO-, -S-, -CH=CH-, -C=C-, -COO-, -OC(O)-, -CH=N-, -C(O)NH, -N=N-, -NH-CO- und Mischungen davon,

unterbrochen sind,
m und n unabhängig 0 oder 1 sind,
Cat einen kationischen Kopf darstellt und ausgewählt ist aus der Gruppe bestehend aus einem Imidazolium, einem Pyridinium, einem Pyrolidinium, einem Ammonium, einem Phosphonium, einem Hydroxyphosphonium und einem Sulfonium,
Pol eine polymerisierbare Gruppe ist.

**4.** Material nach Anspruch 1 oder 2, wobei das Material erhalten wird durch:

(i) Polymerisieren eines Vorläufers der Polymermatrix und der organischen Verbindung in einem Lösungsmittel, das die gelöste Metallclusterverbindung enthält, und Verdampfen des Lösungsmittels; oder
(ii) Polymerisieren eines Vorläufers der Polymermatrix und der organischen Verbindung, Eintauchen des resultierenden Polymers in ein Lösungsmittel, das die gelöste Metallclusterverbindung enthält, und Verdampfen des Lösungsmittels;

wobei die organische Verbindung mit dem Vorläufer der Polymermatrix copolymerisiert ist;

- der Vorläufer der Polymermatrix ein Vorläufer eines linearen oder verzweigten Polymers oder Copolymers ist, umfassend eine oder mehrere Poly(ethylenoxid)-(PEO)-Ketten, wobei das Polymer oder Copolymer gegebenenfalls quervernetzt ist und jede PEO-Kette mindestens 4 Ethylenoxidmonomereinheiten aufweist;
- die organische Verbindung durch die folgende Formel dargestellt wird:

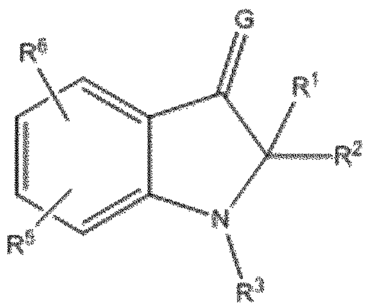

G wie oben definiert ist,
$R^1$ und $R^2$ jeweils unabhängig ausgewählt sind aus Alkyl, Aryl, Alkenyl, Alkinyl (wie Propargyl), -O-C(=O)-CH=$CH_2$, -O-C(=O)-C($CH_3$)=$CH_2$ und -L-Pol,
$R^1$ und $R^2$ zusammen ein Cycloalkyl bilden können,
$R^3$ ausgewählt ist aus H, Alkyl, -C=OAlkyl, C=OAryl, -$CO_2$Alkyl, $CO_2$Aryl, -$SO_2$Alkyl, -$SO_2$Aryl, Alkenyl, Alkinyl (wie Propargyl),-O-C(=O)-CH=$CH_2$, -O-C(=O)-C($CH_3$)=$CH_2$, -L-Pol und -Si$Y^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel -Si$Y^1Y^2Y^3$ -Si($CH_3$)$_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen wie Trifluormethylthiolat -$SCF_3$), -O-C(=O)-CH=$CH_2$, -O-C(=O)-C($CH_3$)=$CH_2$ oder -L-Pol, darstellen,
Mit der Maßgabe, dass mindestens einer von $R^1$, $R^2$, $R^3$, $R^5$ oder $R^6$ -L-Pol ist, wobei L ein Linker mit 1 bis 30 Methylengruppen ist, die gegebenenfalls durch ein oder mehrere Atome oder Atomgruppen, ausgewählt aus der Gruppe bestehend aus aromatischen Ringen, -O-, -CO-, -S-, -CH=CH-, -C≡C-, -COO-, -OC(O)-, -CH=N-, -C(O)NH, -N=N-, -NH-CO- und Mischungen davon, unterbrochen sind, wobei Pol eine polymerisierbare Gruppe ist, die mit dem Vorläufer der Polymermatrix reagiert;

- die Metallclusterverbindung durch Formel $X^+_d[M_6Q^i_8L^a_6]^{d-}$ dargestellt wird, wobei $[M_6Q^i_8L^a_6]^{d-}$ wie oben definiert ist und X ein Gegenkation, ausgewählt aus der Gruppe bestehend aus Alkalimetallkation, Hydronium und einem Ammonium, vorzugsweise ausgewählt aus Cs, K, Na, Li, $H_3O$, $(nC_4H_9)_4N$ und $NH_4$, besonders bevorzugt Cs, ist.

**5.** Material nach Anspruch 1 oder 2, wobei das Material erhalten wird durch:

(i) Polymerisieren eines Vorläufers der Polymermatrix in einem Lösungsmittel, das die gelöste organische

Verbindung und Metallclusterverbindung enthält, und Verdampfen des Lösungsmittels; oder
(ii) Polymerisieren eines Vorläufers der Polymermatrix, Eintauchen des resultierenden Polymers in ein Lösungsmittel, das die gelöste organische Verbindung und Metallclusterverbindung enthält und Verdampfen des Lösungsmittels;

wobei

- die organische Verbindung durch die folgende Formel dargestellt wird

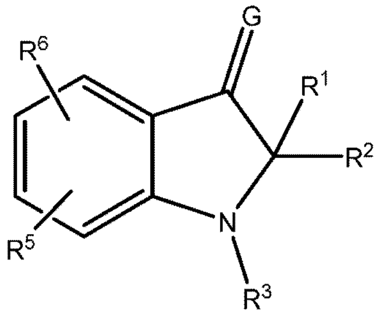

G wie oben definiert ist,
$R^1$ und $R^2$ jeweils unabhängig ausgewählt sind aus Alkyl, Aryl, Alkenyl, Alkinyl (wie Propargyl), -O-C(=O)-CH=$CH_2$, -O-C(=O)-C($CH_3$)=$CH_2$,
$R^1$ und $R^2$ zusammen ein Cycloalkyl bilden können,
$R^3$ ausgewählt ist aus H, Alkyl, -C=OAlkyl, C=OAryl, -$CO_2$Alkyl, $CO_2$Aryl, -$SO_2$Alkyl, -$SO_2$Aryl, Alkenyl, Alkinyl (wie Propargyl),-O-C(=O)-CH=$CH_2$, -O-C(=O)-C($CH_3$)=$CH_2$, und -Si$Y^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel -Si$Y^1Y^2Y^3$ -Si($CH_3$)$_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen wie Trifluormethylthiolat -$SCF_3$), -O-C(=O)-CH=$CH_2$, -O-C(=O)-C($CH_3$)=$CH_2$ darstellen,

- die Metallclusterverbindung durch Formel $X+_d[M_6Q^i_8L^a_6]^{d-}$ dargestellt wird, wobei $[M_6Q^i_8L^a_6]^{d-}$ wie oben definiert ist und X ein Gegenkation, ausgewählt aus der Gruppe bestehend aus Alkalimetallkation, Hydronium und einem Ammonium, vorzugsweise ausgewählt aus Cs, Na, K, Li, $H_3O$, $(nC_4H_9)_4N$ und $NH_4$, besonders bevorzugt Cs, ist,
- der Vorläufer der Polymermatrix ein Vorläufer eines linearen oder verzweigten Polymers oder Copolymers ist, umfassend eine oder mehrere Poly(ethylenoxid)- (PEO)-Ketten, wobei das Polymer oder Copolymer gegebenenfalls quervernetzt ist und jede PEO-Kette mindestens 4 Ethylenoxidmonomereinheiten aufweist.

**6.** Material nach Anspruch 1 oder 2, wobei das Material erhalten wird durch:

(i) Polymerisieren eines Vorläufers der Polymermatrix und der Metallclusterverbindung in einem Lösungsmittel, das die gelöste organische Verbindung enthält, und Verdampfen des Lösungsmittels; oder
(ii) Polymerisieren eines Vorläufers der Polymermatrix und des Metallclusters, Eintauchen des resultierenden Polymers in ein Lösungsmittel, das die gelöste organische Verbindung enthält, und Verdampfen des Lösungsmittels;

wobei der Metallcluster mit dem Vorläufer der Polymermatrix copolymerisiert ist;

- die organische Verbindung durch die folgende Formel dargestellt wird

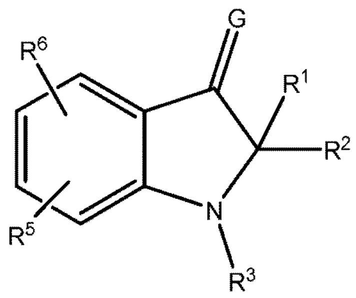

wobei:

G wie oben definiert ist,
$R^1$ und $R^2$ jeweils unabhängig ausgewählt sind aus Alkyl, Aryl, Alkenyl, Alkinyl (wie Propargyl), -O-C(=O)-CH=$CH_2$, -O-C(=O)-C($CH_3$)=$CH_2$,
$R^1$ und $R^2$ zusammen ein Cycloalkyl bilden können,
$R^3$ ausgewählt ist aus H, Alkyl, -C=OAlkyl, C=OAryl, -$CO_2$Alkyl, $CO_2$Aryl, -$SO_2$Alkyl, -$SO_2$Aryl, Alkenyl, Alkinyl (wie Propargyl),-O-C(=O)-CH=$CH_2$, -O-C(=O)-C($CH_3$)=$CH_2$, und -Si$Y^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel -Si$Y^1Y^2Y^3$ -Si($CH_3$)$_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen wie Trifluormethylthiolat -$SCF_3$), -O-C(=O)-CH=$CH_2$, -O-C(=O)-C($CH_3$)=$CH_2$, darstellen,

- die Metallclusterverbindung durch Formel $X^+_d[M_6Q^i_8L^a_6]^{d-}$ dargestellt wird, wobei $[M_6Q^i_8L^a_6]^{d-}$ wie oben definiert ist und X ein organisches Gegenkation ist, wobei das organische Gegenkation einen kationischen Kopf enthält, der durch mindestens einen Substituenten, umfassend eine polymerisierbare Gruppe, substituiert ist und die folgende Formel $(L1)_{m}$-Cat-$(L2)_n$-Pol aufweist,

wobei

L1 und L2 jeweils unabhängig Linker mit 1 bis 30 Methylengruppen sind, die gegebenenfalls durch ein oder mehrere Atome oder Atomgruppen, ausgewählt aus der Gruppe bestehend aus aromatischen Ringen, -O-, -CO-, -S-, -CH=CH-, -C=C-, -COO-, -OC(O)-, -CH=N-, -C(O)NH, -N=N-, -NH-CO- und Mischungen davon, unterbrochen sind,
m und n unabhängig 0 oder 1 sind,
Cat einen kationischen Kopf darstellt und ausgewählt ist aus der Gruppe bestehend aus einem Imidazolium, einem Pyridinium, einem Pyrolidinium, einem Ammonium, einem Phosphonium, einem Hydroxyphosphonium und einem Sulfonium,
Pol eine polymerisierbare Gruppe ist.

7. Material nach Anspruch 1 oder 2, wobei das Material erhalten wird durch Umsetzen der organischen Verbindung und der Metallclusterverbindung, um ein Salz zu bilden, und Polymerisieren eines Vorläufers der Polymermatrix und des Salzes;

- die organische Verbindung durch folgende Formel dargestellt wird:

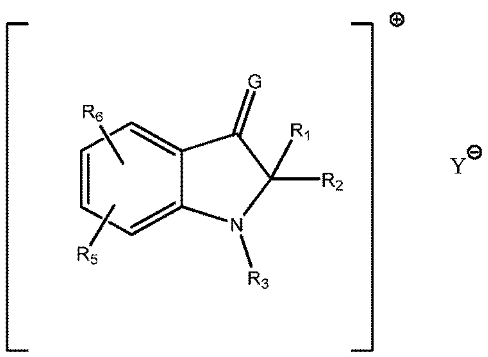

wobei:

G wie oben definiert ist,
$R^1$ und $R^2$ jeweils unabhängig ausgewählt sind aus Alkyl, Aryl, Alkenyl, Alkinyl (wie Propargyl), -O-C(=O)-CH=$CH_2$, -O-C(=O)-C($CH_3$)=$CH_2$, -$(L3)_p$-$(Cat)_r$-$(L4)_q$-$(Pol)_s$, -$(L3)_p$-$(Pol)_r$-$(L4)_q$-$(Cat)_s$,
$R^1$ und $R^2$ zusammen ein Cycloalkyl bilden können,
$R^3$ ausgewählt ist aus H, Alkyl, -C=OAlkyl, C=OAryl, -$CO_2$Alkyl, $CO_2$Aryl, -$SO_2$Alkyl, -$SO_2$Aryl, Alkenyl, Alkinyl (wie Propargyl),-O-C(=O)-CH=$CH_2$, -O-C(=O)-C($CH_3$)=$CH_2$, -$(L3)_p$-$(Cat)_r$-$(L4)_q$-$(Pol)_s$, -$(L3)_p$-$(Pol)_r$-$(L4)_q$-$(Cat)_s$ und -Si$Y^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel -Si$Y^1Y^2Y^3$ -Si$(CH_3)_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen wie Trifluormethylthiolat -$SCF_3$), -O-C(=O)-CH=$CH_2$, -O-C(=O)-C($CH_3$)=$CH_2$, -$(L3)_p$-$(Cat)_r$-$(L4)_q$-$(Pol)_s$, -$(L3)_p$-$(Pol)_r$-$(L4)_q$-$(Cat)_s$ darstellen, wobei
L3 und L4 jeweils unabhängig Linker mit 1 bis 30 Methylengruppen sind, die gegebenenfalls durch ein oder mehrere Atome oder Atomgruppen, ausgewählt aus der Gruppe bestehend aus aromatischen Ringen, -O-, -CO-, -S-, -CH=CH-, -C=C-, -COO-, -OC(O)-, -CH=N-, -C(O)NH, -N=N-, -NH-CO- und Mischungen davon, unterbrochen sind,
p und q unabhängig voneinander 0 oder 1 sind,
Cat eine kationische Gruppe ist, vorzugsweise ausgewählt aus Imidazolium, einem Pyridinium, einem Pyrolidinium, einem Ammonium, einem Phosphonium, einem Hydroxyphosphonium und einem Sulfonium,
Pol eine polymerisierbare Gruppe ist,
r und s unabhängig voneinander 0 oder 1 sind,
Mit der Maßgabe, dass mindestens einer von $R^1$, $R^2$, $R^3$, $R^5$ oder $R^6$ -$(L3)_p$-$(Cat)_r$-$(L4)_q$-$(Pol)_s$ oder -$(L3)_p$-$(Pol)_r$-$(L4)_q$-$(Cat)_s$ ist,

- die Metallclusterverbindung durch Formel $X^+{}_d[M_6Q^i{}_8L^a{}_6]^{d-}$ dargestellt wird, wobei $[M_6Q^i{}_8L^a{}_6]^{d-}$ wie oben definiert ist und X ein Gegenkation, ausgewählt aus der Gruppe bestehend aus Alkalimetallkation, Hydronium und einem Ammonium, vorzugsweise ausgewählt aus Cs, K, $H_3O$, $(nC_4H_9)_4N$ und $NH_4$, besonders bevorzugt Cs, ist,
- das Salz durch folgende Formel dargestellt wird:

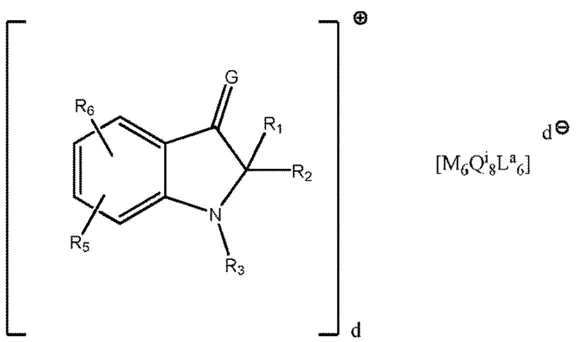

**8.** Material nach Anspruch 1 oder 2, wobei das Material erhalten wird durch:

(i) Umsetzen der organischen Verbindung und der Metallclusterverbindung, um einen Komplex zu bilden, und Polymerisieren eines Vorläufers der Polymermatrix und des Komplexes in einem Lösungsmittel und Verdampfen des Lösungsmittels oder
(ii) Polymerisieren eines Vorläufers der Polymermatrix und der organischen Verbindung, Eintauchen des resultierenden Polymers in ein Lösungsmittel, das die gelöste Metallclusterverbindung enthält, und Verdampfen des Lösungsmittels

wobei die organische Verbindung mit dem Vorläufer der Polymermatrix copolymerisiert ist;

- die organische Verbindung durch die folgende Formel dargestellt wird:

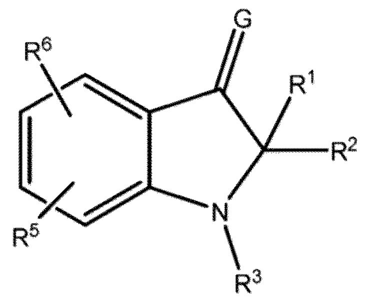

wobei:

G wie oben definiert ist,
$R^1$ und $R^2$ jeweils unabhängig ausgewählt sind aus Alkyl, Aryl, Alkenyl, Alkinyl (wie Propargyl), -O-C(=O)-CH=$CH_2$, -O-C(=O)-C($CH_3$)=$CH_2$, -L6-Pol, -L7-Ring, -L8-PEO, -L9-PEO-L10-Pol, und -L11-Ring-L12-Pol,
$R^1$ und $R^2$ zusammen ein Cycloalkyl bilden können,
$R^3$ ausgewählt ist aus H, Alkyl, -C=OAlkyl, C=OAryl, -$CO_2$Alkyl, $CO_2$Aryl, -$SO_2$Alkyl, -$SO_2$Aryl, Alkenyl, Alkinyl (wie Propargyl),-O-C(=O)-CH=$CH_2$, -O-C(=O)-C($CH_3$)=$CH_2$, -L6-Pol, -L7-Ring, -L8-PEO, -L9-PEO-L10-Pol, -L11-Ring-L12-Pol und -Si$Y^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel -Si$Y^1Y^2Y^3$ -Si($CH_3$)$_3$ ist),
$R^5$ und $R^6$ jeweils unabhängig H, Alkyl, Aryl, Heteroaryl, Hydroxyl, Amino, Halogen, Halogenalkyl, wie Trifluormethyl, Halogenalkylthio, wie Perhalogenalkylthiogruppen, wie Trifluormethylthiolat -$SCF_3$, -O-C(=O)-CH=$CH_2$, -O-C(=O)-C($CH_3$)=$CH_2$, -L6-Pol, -L7-Ring, -L8-PEO, -L9-PEO-L10-Pol, oder -L11-Ring-L12-Pol, darstellen,
L6, L7, L8, L9, L10, L11 und L12 jeweils unabhängig Linker mit 1 bis 30 Methylengruppen sind, die gegebenenfalls durch ein oder mehrere Atome oder Atomgruppen, ausgewählt aus der Gruppe bestehend aus aromatischen Ringen, -O-, -CO-, -S-, -CH=CH-, -C=C-, -COO-, -OC(O)-, -CH=N-, -C(O)NH, -N=N-, -NH-CO- und Mischungen davon, unterbrochen sind,
wobei ein Ring ein zyklischer Ether ist, umfassend 12 bis 21 Ringatome mit mindestens 4 Ethylenoxideinheiten und gegebenenfalls durch ein oder mehrere Stickstoffatome unterbrochen,
wobei PEO eine Kette ist, umfassend mindestens 4 Ethylenoxideinheiten und gegebenenfalls durch ein oder mehrere Stickstoffatome unterbrochen,
Und mit der Maßgabe, dass

(i) mindestens einer von $R^1$, $R^2$, $R^3$, $R^5$ oder $R^6$ -L6-Pol ist und mindestens einer von $R^1$, $R^2$, $R^3$, $R^5$ oder $R^6$ -L7-Ring oder -L8-PEO ist
oder
(ii) mindestens einer von $R^1$, $R^2$, $R^3$, $R^5$ oder $R^6$ -L9-PEO-L10-Pol, -L11-Ring-L12-Pol ist,

- die Metallclusterverbindung durch Formel $X^+_d[M_6Q^i_8L^a_6]^{d-}$ dargestellt wird, wobei $[M_6Q^i_8L^a_6]^{d-}$ wie oben definiert ist und X ein Gegenkation, ausgewählt aus der Gruppe bestehend aus Alkalimetallkation, Hydronium und einem Ammonium, vorzugsweise ausgewählt aus Cs, Na, K, Li, $H_3O$, $(nC_4H_9)_4N$ und $NH_4$, besonders bevorzugt Cs, ist.

**9.** Material nach Anspruch 1 oder 2, wobei das Material erhalten wird durch Solubilisieren der Polymermatrix, der

organischen Verbindung und der Metallclusterverbindung in einem Lösungsmittel und Verdampfen des Lösungsmittels,
wobei:

- die organische Verbindung durch die folgende Formel dargestellt wird

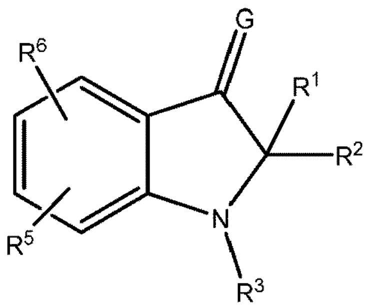

G wie oben definiert ist,
$R^1$ und $R^2$ jeweils unabhängig ausgewählt sind aus Alkyl, Aryl, Alkenyl, Alkinyl (wie Propargyl), $-O-C(=O)-CH=CH_2$, $-O-C(=O)-C(CH_3)=CH_2$,
$R^1$ und $R^2$ zusammen ein Cycloalkyl bilden können,
$R^3$ ausgewählt ist aus H, Alkyl, -C=OAlkyl, C=OAryl, $-CO_2$Alkyl, $CO_2$Aryl, $-SO_2$Alkyl, $-SO_2$Aryl, Alkenyl, Alkinyl (wie Propargyl), $-O-C(=O)-CH=CH_2$, $-O-C(=O)-C(CH_3)=CH_2$, und $-SiY^1Y^2Y^3$, wobei $Y^1$, $Y^2$, $Y^3$ jeweils unabhängig ausgewählt sind aus H, Alkyl, Alkoxy, Cycloalkyl, Aryl, Aryloxy und Aralkyl (zum Beispiel $-SiY^1Y^2Y^3$ $-Si(CH_3)_3$ ist),
$R^5$ und $R^6$ jeweils unabhängig H, Alkyl, Aryl, Heteroaryl, Hydroxyl, Amino, Halogen, Halogenalkyl (wie Trifluormethyl), Halogenalkylthio (wie Perhalogenalkylthiogruppen, wie Trifluormethylthiolat $-SCF_3$), $-O-C(=O)-CH=CH_2$, $-O-C(=O)-C(CH_3)=CH_2$, darstellen,

- die Metallclusterverbindung durch Formel $X^+_d[M_6Q^i_8L^a_6]^{d-}$ dargestellt wird, wobei $[M_6Q^i_8L^a_6]^{d-}$ wie oben definiert ist und X ein Gegenkation, ausgewählt aus der Gruppe bestehend aus Alkalimetallkation, Hydronium und einem Ammonium, vorzugsweise ausgewählt aus Cs, Na, K, Li, $H_3O$, $(nC_4H_9)_4N$ und $NH_4$, besonders bevorzugt Cs, ist.

**10.** Material nach einem der Ansprüche 1 bis 9, wobei die Polymermatrix ausgewählt ist aus der Gruppe bestehend aus Polyamiden, Polycarbonaten, Polyolefinen wie Polyethylen, Polyimiden, Polyacrylamiden, Poly(meth)acrylaten wie Polymethylmethacrylat (PMMA), Styrolpolymeren wie Polystyrol, Polyurethan, Polyvinylchlorid, Polyester wie Polyethylennaphtalat, Polyethylenterephthalat, Polymilchsäure (PLA), Poly(milch-co-glykolsäure) (PLGA), Polyacrylsäure, Polyvinylalkohol, Polyether wie Polyethylenoxid (PEO), Polyoxysilan wie Polydimethylsiloxan (PDMS), Celluloseester wie Celluloseacetatphthalat (CAP), Alkylcellulose wie Ethylcellulose und Hydroxyalkylcellulose wie Ethoxycellulose, vorzugsweise Polymethylmethacrylat (PMMA) oder Polydimethylsiloxan (PDMS) oder Celluloseacetatphthalat (CAP), besonders bevorzugt Polymethylmethacrylat (PMMA).

**11.** Material nach einem der Ansprüche 1 bis 9, wobei die Polymermatrix ausgewählt ist aus der Gruppe bestehend aus PEO, vernetztem PEO-Ureasil, vernetztem PEO-Urethansil, Polymethylmethacrylat-Poly(ethylenoxid)methacrylat (PMMA-PEOMA), Polydimethylsiloxan-PEO (PDMS-PEO), Polyvinylpyrrolidon-PEO (PVP-PEO), Polyurethan-PEO (PU-PEO), Polystyrol-PEO (PS-PEO), Polyethylen-PEO (PE-PEO), Polyester-PEO (PES-PEO), Polyamid-PEO, Polycaprolacton-PEO, Polyacrylamid-PEO, Polymilchsäure-PEO (PLA-PEO), Poly(milch-co-glykolsäure)-PEO (PLGA-PEO) und Mischungen davon.

**12.** Material nach einem der Ansprüche 1 bis 11, wobei die polymerisierbare Gruppe Pol eine Gruppe ist, die eine Funktion umfasst, die ausgewählt ist aus der Gruppe bestehend aus: Kohlenstoff-Kohlenstoff-Doppelbindung, Kohlenstoff-Kohlenstoff-Dreifachbindung, eine Azidfunktion,
eine (Meth)acrylatfunktion, Acrylatfunktion, eine Aminfunktion, eine Carboxylfunktion, eine Aldehydfunktion, eine Hydroxylfunktion, eine Alkoxyfunktion, ein Iodatom, ein Bromatom und ein Chloratom; stärker bevorzugt eine Funktion ausgewählt aus der Gruppe bestehend aus einer Acrylatfunktion $(-O-C(=O)-CH=CH_2)$, einer Methacrylatfunktion $(-O-C(=O)-C(CH_3)=CH_2)$, einer Kohlenstoff-Kohlenstoff-Doppelbindung und einer Kohlenstoff-Kohlenstoff-Dreifachbindung.

**13.** Verwendung des Materials nach einem der Ansprüche 1 bis 12 zur Datenaufzeichnung, Datenspeicherung, Erfassung, Fälschungsbekämpfung, für Optoelektronika oder theranostische Anwendungen.

**14.** Verwendung des Materials nach einem der Ansprüche 1 bis 12 in Geräten ausgewählt aus der Gruppe von Anzeigegeräten, Polymermatrix-Flachbildschirmen, LCD-Bildschirmen, Photovoltaikzellen, Temperaturdetektoren, Gassensoren, Drucksensoren, Elektrolumineszenzdioden, LASERn, aktiven Wellenleitern und Feldeffekttransistoren.

**Revendications**

**1.** Matériau comprenant une matrice polymère fonctionnalisée avec :

- un composé organique comprenant une fraction de formule

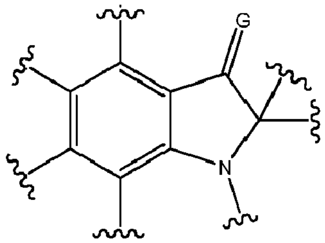

dans lequel G est :

- un oxygène ;
- un soufre ;
- $NR^a$, $N^{(+)}R^aR^b$ avec $R^a$ et $R^b$ étant chacun indépendamment H, un alkyle en $C_1$-$C_{18}$, un aryle ou un hétéroaryle ;
- CH-(EWG) C-$(EWG)_2$ ou ($EWG^1$)-C-($EWG^2$) avec EWG, $EWG^1$, $EWG^2$ étant un groupe attracteur d'électrons (tel qu'un nitrile (-C=N) ; une cétone (C=O)-$R^c$ ; (un ester (-(C=O)-$OR^c$) avec $R^c$ sélectionné parmi H, un alkyle en $C_1$-$C_{18}$, un aryle et un hétéroaryle ; un aryle ou un hétéroaryle (tel qu'un pyridinyle et un pyrimidinyle)) ;
- de préférence un oxygène ;
- et un composé d'agrégat métallique comprenant une fraction de formule $[M_6Q^i_8L^a_6]^{d-}$

dans lequel :

- M représente un molybdène (Mo), un tungstène (W), un rhénium (Re), ou un mélange de ceux-ci, de préférence Mo ou W ;
- $Q^i$ est un ligand interne et représente un atome d'halogène ou de chalcogène, de préférence un atome d'halogène, ou un mélange de ceux-ci ; et
- $L^a$ est un ligand apical et représente un atome d'halogène, un ligand organique ou un mélange de ceux-ci ;
- d est dans la plage de -4 à +4, de préférence de 2 à 4, de manière davantage préférée 2 ;

dans lequel ledit composé organique et ledit composé d'agrégat métallique sont indépendamment :

liés à la matrice polymère par

- une liaison covalente
- une interaction électrostatique
- une interaction supramoléculaire
- une complexation/adsorption

et/ou
dispersés à l'intérieur de la matrice polymère (mélange/intégration).

**2.** Matériau selon la revendication 1, dans lequel

- M représente un molybdène (Mo), un tungstène (W), un rhénium (Re), ou un mélange de ceux-ci, de préférence

Mo ou W, de manière davantage préférée Mo ;
- $Q^i$ représente Cl, Br, I, S, Se ou un mélange de ceux-ci, de préférence Cl, Br ou 1 ; et
- $L^a$ représente Cl, Br, I, CN, SCN, un carboxylate ou un mélange de ceux-ci, de préférence Cl, Br, I, un groupe $C_3F_7COO$ ou $C_2F_5COO$.

**3.** Matériau selon la revendication 1 ou 2, dans lequel ledit matériau est obtenu par polymérisation du composé organique, du composé d'agrégat métallique et d'un précurseur de la matrice polymère ;
dans lequel le composé d'agrégat métallique et le composé organique sont copolymérisés avec le précurseur de la matrice polymère ;

- le composé organique est représenté par la formule :

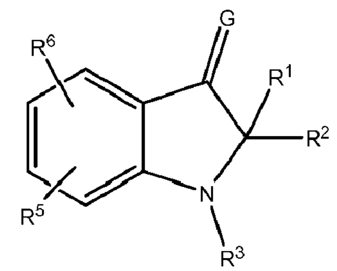

dans lequel :

G est tel que défini ci-dessus,
$R^1$ et $R^2$ sont chacun indépendamment sélectionnés parmi un alkyle, un aryle, un alcényle (tel qu'un allyle), un alcynyle (tel qu'un propargyle), $-O-C(=O)-CH=CH_2$, $- O-C(=O)-C(CH_3)=CH_2$, et -L-Pol,
$R^1$ et $R^2$ peuvent ensemble former un cycloalkyle,
$R^3$ est sélectionné parmi H, un alkyle, un -C=Oalkyle, un C=Oaryle, un $-CO_2$alkyle, un $CO_2$aryle, un $-SO_2$alkyle, un $-SO_2$aryle, un alcényle, un alcynyle (tel qu'un propargyle), $-O-C(=O)-CH=CH_2$, $-O-C(=O)-C(CH_3)=CH_2$, -L-Pol et $-SiY^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple $-SiY^1Y^2Y^3$ est $-Si(CH_3)_3$),
$R^5$ et $R^6$ représentent chacun indépendamment H, un alkyle, un aryle, un hétéroaryle, un hydroxyle, un amino, un halogéno, un halogénoalkyle (tel qu'un trifluorométhyle), un halogénoalkylthio (tel que des groupes perhalogénoalkylthio tels qu'un trifluorométhylthiolate $-SCF_3$), $-O-C(=O)-CH=CH_2$, $-O-C(=O)-C(CH_3)=CH_2$ ou -L-Pol,
à condition qu'au moins l'un parmi $R^1$, $R^2$, $R^3$, $R^5$ ou $R^6$ soit -L-Pol, L étant un lieur ayant de 1 à 30 groupes méthylène facultativement interrompus par un ou plusieurs atomes ou groupes d'atomes choisis dans le groupe constitué de cycles aromatiques, -O-, -CO-, -S-, -CH=CH-, -C=C-, -COO-, -OC(O)-, -CH=N-, -C(O)NH, -N=N-, - NH-CO- et de mélanges de ceux-ci, Pol étant un groupe polymérisable ;

- le composé d'agrégat métallique est représenté par la formule $X^+a[M_6Q^i_8L^a_6]^{d-}$ dans lequel $[M_6Q^1_8L^a_6]^{d-}$ est tel que défini ci-dessus et X est un contre-cation organique, ledit contre-cation organique contenant une tête cationique substituée par au moins un substituant incluant un groupe polymérisable et ayant la formule suivante $(L1)_m$-Cat-$(L2)_n$-Pol,

dans lequel

L1 et L2 sont chacun indépendamment des lieurs ayant de 1 à 30 groupes méthylène, facultativement interrompus par un ou plusieurs atomes ou groupes d'atomes choisis dans le groupe constitué de cycles aromatiques, -O-, -CO-, -S-, -CH=CH-, -C=C-, - COO-, -OC(O)-, -CH=N-, -C(O)NH, -N=N-, -NH-CO- et de mélanges de ceux-ci m et n indépendamment 0 ou 1,
Cat représente une tête cationique et est choisi dans le groupe constitué d'un imidazolium, d'un pyridinium, d'un pyrrolidinium, d'un ammonium, d'un phosphonium, d'un hydroxyphosphonium et d'un sulfonium,
Pol est un groupe polymérisable.

**4.** Matériau selon la revendication 1 ou 2, dans lequel ledit matériau est obtenu par :

(i) polymérisation d’un précurseur de la matrice polymère et du composé organique dans un solvant contenant le composé d’agrégat métallique dissous et évaporation du solvant ; ou
(ii) polymérisation d’un précurseur de la matrice polymère et du composé organique, immersion dudit polymère résultant dans un solvant contenant le composé d’agrégat métallique dissous et évaporation du solvant ;

dans lequel le composé organique est copolymérisé avec le précurseur de la matrice polymère ;

- ledit précurseur de la matrice polymère est un précurseur d’un polymère ou copolymère linéaire ou ramifié contenant une ou plusieurs chaînes de poly(oxyde d’éthylène) (PEO), ledit polymère ou copolymère étant facultativement réticulé et chaque chaîne de PEO ayant au moins 4 unités monomère d’oxyde d’éthylène ;
- le composé organique est représenté par la formule :

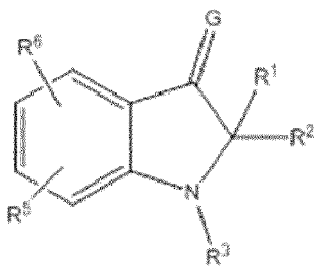

G est tel que défini ci-dessus,
$R^1$ et $R^2$ sont chacun indépendamment sélectionnés parmi un alkyle, un aryle, un alcényle, un alcynyle (tel qu’un propargyle), $-O-C(=O)-CH=CH_2$, $-O-C(=O)-C(CH_3)=CH_2$ et -L-Pol,
$R^1$ et $R^2$ peuvent ensemble former un cycloalkyle,
$R^3$ est sélectionné parmi H, un alkyle, un -C=Oalkyle, un C=Oaryle, un $-CO_2$alkyle, un $CO_2$aryle, un $-SO_2$alkyle, $-SO_2$, un alcényle, un alcynyle (tel qu’un propargyle), - $O-C(=O)-CH=CH_2$, $-O-C(=O)-C(CH_3)=CH_2$, -L-Pol et $-SiY^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple $-SiY^1Y^2Y^3$ est - $Si(CH_3)_3$),
$R^5$ et $R^6$ représentent chacun indépendamment H, un alkyle, un aryle, un hétéroaryle, un hydroxyle, un amino, un halogéno, un halogénoalkyle (tel qu’un trifluorométhyle), un halogénoalkylthio (tel que des groupes perhalogénoalkylthio tels qu’un trifluorométhylthiolate $-SCF_3$), $-O-C(=O)-CH=CH_2$, $-O-C(=O)-C(CH_3)=CH_2$ ou -L-Pol,
à condition qu’au moins l’un parmi $R^1$, $R^2$, $R^3$, $R^5$ ou $R^6$ soit L-Pol, L étant un lieur ayant de 1 à 30 groupes méthylène facultativement interrompu par un ou plusieurs atomes ou groupes d’atomes choisis dans le groupe constitué de cycles aromatiques, -O-, -CO-, -S-, -CH=CH-, -C=C-, -COO-, -OC(O)-, -CH=N-, -C(O)NH, -N=N-, - NH-CO- et des mélanges de ceux-ci, Pol étant un groupe polymérisable qui réagit avec le précurseur de la matrice polymère ;

- le composé d’agrégat métallique est représenté par la formule $X^+_d[M_6Q^1_8L^a_6]^{d-}$ dans lequel $[M_6Q^1_8L^a_6]^{d-}$ est tel que défini ci-dessus et X est un contre-cation choisi dans le groupe constitué d’un cation de métal alcalin, d’un hydronium, et d’un ammonium, de préférence choisi parmi Cs, K, Na, Li, $H_3O$, $(nC_4H_9)_4N$ et $NH_4$, de manière davantage préférée Cs.

**5.** Matériau selon la revendication 1 ou 2, dans lequel ledit matériau est obtenu par :

(i) polymérisation d’un précurseur de la matrice polymère dans un solvant contenant le composé organique et le composé d’agrégat métallique dissous, et évaporation du solvant ; ou
(ii) polymérisation d’un précurseur de la matrice polymère, immersion du polymère résultant dans un solvant contenant le composé organique et le composé d’agrégat métallique dissous et évaporation du solvant ;

dans lequel

- le composé organique est représenté par la formule

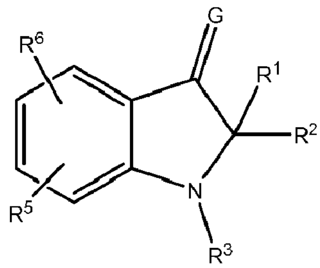

G est tel que défini ci-dessus,
$R^1$ et $R^2$ sont chacun indépendamment sélectionnés parmi un alkyle, un aryle, un alcényle, un alcynyle (tel qu'un propargyle), $-O-C(=O)-CH=CH_2$, $-O-C(=O)-C(CH_3)=CH_2$,
$R^1$ et $R^2$ peuvent ensemble former un cycloalkyle,
$R^3$ est sélectionné parmi H, un alkyle, un -C=Oalkyle, un C=Oaryle, un $-CO_2$alkyle, un $CO_2$aryle, un $-SO_2$alkyle, un $-SO_2$aryle, un alcényle, un alcynyle (tel qu'un propargyle), $-O-C(=O)-CH=CH_2$, $-O-C(=O)-C(CH_3)=CH_2$ et $-SiY^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple $-SiY^1Y^2Y^3$ est $-Si(CH_3)_3$),
$R^5$ et $R^6$ représentent chacun indépendamment H, un alkyle, un aryle, un hétéroaryle, un hydroxyle, un amino, un halogéno, un halogénoalkyle (tel qu'un trifluorométhyle), un halogénoalkylthio (tel que des groupes perhalogénoalkylthio tels qu'un trifluorométhylthiolate $-SCF_3$), $-O-C(=O)-CH=CH_2$, $-O-C(=O)-C(CH_3)=CH_2$,

- le composé d'agrégat métallique est représenté par la formule $X^+_d[M_6Q^1_8L^a_6]^{d-}$ dans lequel $[M_6Q^1_8L^a_6]^{d-}$ est tel que défini ci-dessus et X est un contre-cation choisi dans le groupe constitué d'un cation de métal alcalin, d'un hydronium, et d'un ammonium, de préférence choisi parmi Cs, Na, K, Li, $H_3O$, $(nC_4H_9)_4N$ et $NH_4$, de manière davantage préférée Cs,
- ledit précurseur de la matrice polymère est un précurseur d'un polymère ou copolymère linéaire ou ramifié contenant une ou plusieurs chaînes de poly(oxyde d'éthylène) (PEO), ledit polymère ou copolymère étant facultativement réticulé et chaque chaîne de PEO ayant au moins 4 unités monomère d'oxyde d'éthylène.

**6.** Matériau selon la revendication 1 ou 2, dans lequel ledit matériau est obtenu par :

(i) polymérisation d'un précurseur de la matrice polymère et du composé d'agrégat métallique dans un solvant contenant le composé organique dissous et évaporation du solvant ; ou
(ii) polymérisation d'un précurseur de la matrice polymère et de l'agrégat métallique, immersion dudit polymère résultant dans un solvant contenant le composé organique dissous et évaporation du solvant ;

dans lequel l'agrégat métallique est copolymérisé avec le précurseur de la matrice polymère ;

- le composé organique est représenté par la formule :

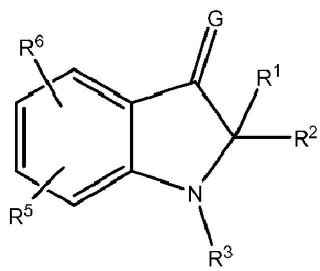

dans lequel :

G est tel que défini ci-dessus,
$R^1$ et $R^2$ sont chacun indépendamment sélectionnés parmi un alkyle, un aryle, un alcényle, un alcynyle (tel qu'un propargyle), $-O-C(=O)-CH=CH_2$, $-O-C(=O)-C(CH_3)=CH_2$,

$R^1$ et $R^2$ peuvent ensemble former un cycloalkyle,
$R^3$ est sélectionné parmi H, un alkyle, un -C=Oalkyle, un C=Oaryle, un -$CO_2$alkyle, un $CO_2$aryle, un -$SO_2$alkyle, un -$SO_2$aryle, un alcényle, un alcynyle (tel qu'un propargyle), -O-C(=O)-CH=$CH_2$, et -O-C(=O)-C($CH_3$)=$CH_2$ et -Si$Y^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple -Si$Y^1Y^2Y^3$ est -Si($CH_3$)$_3$),
$R^5$ et $R^6$ représentent chacun indépendamment H, un alkyle, un aryle, un hétéroaryle, un hydroxyle, un amino, un halogéno, un halogénoalkyle (tel qu'un trifluorométhyle), un halogénoalkylthio (tel que des groupes perhalogénoalkylthio tels qu'un trifluorométhylthiolate -$SCF_3$), -O-C(=O)-CH=$CH_2$, ou -O-C(=O)-C($CH_3$)=$CH_2$,

- le composé d'agrégat métallique est représenté par la formule $X^+a[M_6Q^1{}_8L^a{}_6]^{d-}$ dans lequel $[M_6Q^1{}_8L^a{}_6]^{d-}$ est tel que défini ci-dessus et X est un contre-cation organique contenant une tête cationique substituée par au moins un substituant incluant un groupe polymérisable et ayant la formule suivante $(L1)_m$-Cat-$(L2)_n$-Pol,

dans lequel

L1 et L2 sont chacun indépendamment des lieurs ayant de 1 à 30 groupes méthylène, facultativement interrompus par un ou plusieurs atomes ou groupes d'atomes choisis dans le groupe constitué de cycles aromatiques, -O-, -CO-, -S-, -CH=CH-, -C=C-, - COO-, -OC(O)-, -CH=N-, -C(O)NH, -N=N-, -NH-CO- et de mélanges de ceux-ci,
m et n indépendamment 0 ou 1,
Cat représente une tête cationique et est choisi dans le groupe constitué d'un imidazolium, d'un pyridinium, d'un pyrrolidinium, d'un ammonium, d'un phosphonium, d'un hydroxyphosphonium et d'un sulfonium,
Pol est un groupe polymérisable.

**7.** Matériau selon la revendication 1 ou 2, dans lequel ledit matériau est obtenu par réaction du composé organique et du composé d'agrégat métallique pour former un sel, et polymérisation d'un précurseur de la matrice polymère et du sel ;

- le composé organique est représenté par la formule :

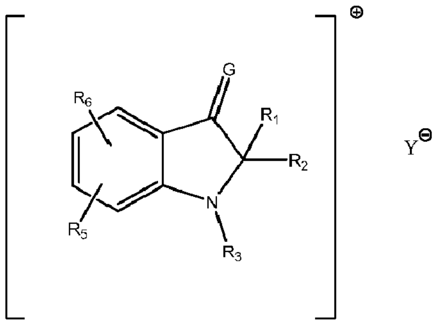

dans lequel :

G est tel que défini ci-dessus,
$R^1$ et $R^2$ sont chacun indépendamment sélectionnés parmi un alkyle, un aryle, un alcényle, un alcynyle (tel qu'un propargyle), -O-C(=O)-CH=$CH_2$, -O-C(=O)-C($CH_3$)=$CH_2$, $-(L3)_p-(Cat)_r-(L4)_q-(Pol)_s$, $-(L3)_p-(Pol)_r-(L4)_q-(Cat)_s$,
$R^1$ et $R^2$ peuvent ensemble former un cycloalkyle,
$R^3$ est sélectionné parmi H, un alkyle, un -C=Oalkyle, un C=Oaryle, un -$CO_2$alkyle, un $CO_2$aryle, un -$SO_2$alkyle, un -$SO_2$aryle, un alcényle, un alcynyle (tel qu'un propargyle), -O-C(=O)-CH=$CH_2$, -O-C(=O)-C($CH_3$)=$CH_2$, $-(L3)_p-(Cat)_r-(L4)_q-(Pol)_s$, $-(L3)_P-(Pol)_r-(L4)_q-(Cat)_s$ et -Si$Y^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple -Si$Y^1Y^2Y^3$ est -Si($CH_3$)$_3$),
$R^5$ et $R^6$ représentent chacun indépendamment H, un alkyle, un aryle, un hétéroaryle, un hydroxyle, un amino, un halogéno, un halogénoalkyle (tel qu'un trifluorométhyle), un halogénoalkylthio (tel que des groupes perhalogénoalkylthio tels qu'un trifluorométhylthiolate -$SCF_3$), -O-C(=O)-CH=$CH_2$, -O-

$C(=O)-C(CH_3)=CH_2$, $-(L3)_p-(Cat)_r-(L4)_q-(Pol)_s$, $-(L3)_p-(Pol)_r-(L4)_q-(Cat)_s$,
dans lequel
L3 et L4 sont chacun indépendamment des lieurs ayant de 1 à 30 groupes méthylène, facultativement interrompus par un ou plusieurs atomes ou groupes d'atomes choisis dans le groupe constitué de cycles aromatiques, -O-, -CO-, -S-, -CH=CH-, -C=C-, - COO-, -OC(O)-, -CH=N-, -C(O)NH, -N=N-, -NH-CO- et des mélanges de ceux-ci,
p et q indépendamment 0 ou 1,
Cat est un groupe cationique, de préférence sélectionné parmi un imidazolium, un pyridinium, un pyrrolidinium, un ammonium, un phosphonium, un hydroxyphosphonium et un sulfonium, Pol est un groupe polymérisable,
r et s indépendamment 0 ou 1,
à condition qu'au moins l'un parmi $R^1$, $R^2$, $R^3$, $R^5$ ou $R^6$ soit $-(L3)_p-(Cat)_r-(L4)_q-(Pol)_s$, ou $-(L3)_p-(Pol)_r-(L4)_q-(Cat)_s$,

- le composé d'agrégat métallique est représenté par la formule $X^+a[M_6Q^1{}_8L^a{}_6]^{d-}$ dans lequel $[M_6Q^1{}_8L^a{}_6]^{d-}$ est tel que défini ci-dessus et X est un contre-cation choisi dans le groupe constitué d'un cation de métal alcalin, d'un hydronium, et d'un ammonium, de préférence choisi parmi Cs, K, $H_3O$, $(nC_4H_9)_4N$ et $NH_4$, de manière davantage préférée Cs,
- le sel est représenté par la formule :

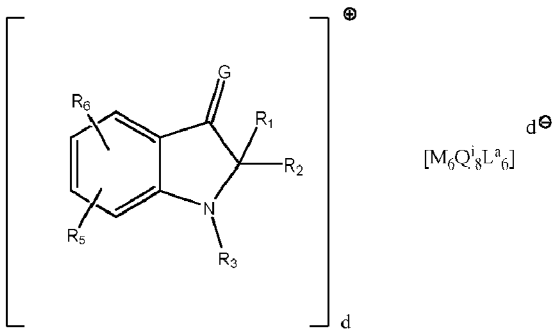

8. Matériau selon la revendication 1 ou 2, dans lequel ledit matériau est obtenu par :

(i) mise en réaction du composé organique et du composé d'agrégat métallique pour former un complexe et polymérisation d'un précurseur de la matrice polymère et du complexe dans un solvant et évaporation du solvant ou
(ii) polymérisation d'un précurseur de la matrice polymère et du composé organique, immersion dudit polymère résultant dans un solvant contenant le composé d'agrégat métallique dissous et évaporation du solvant

dans lequel le composé organique est copolymérisé avec le précurseur de la matrice polymère ;

- le composé organique est représenté par la formule :

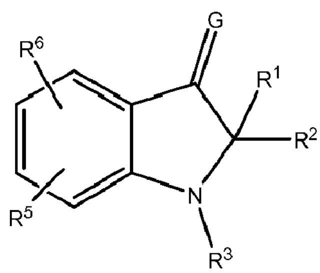

dans lequel :

G est tel que défini ci-dessus,
$R^1$ et $R^2$ sont chacun indépendamment sélectionnés parmi un alkyle, un aryle, un alcényle, un alcynyle (tel

qu'un propargyle), -O-C(=O)-CH=$CH_2$, -O-C(=O)-C($CH_3$)=$CH_2$, -L6-Pol, -L7-Cycle, -L8-PEO, -L9-PEO-L10-Pol, et -L11-Cycle-L12-Pol,

$R^1$ et $R^2$ peuvent ensemble former un cycloalkyle,

$R^3$ est sélectionné parmi H, un alkyle, un -C=Oalkyle, un C=Oaryle, un -$CO_2$alkyle, un $CO_2$aryle, un -$SO_2$alkyle, un -$SO_2$aryle, un alcényle, un alcynyle (tel qu'un propargyle), -O-C(=O)-CH=$CH_2$, -O-C(=O)-C($CH_3$)=$CH_2$, -L6-Pol, -L7-Cycle, -L8-PEO, -L9-PEO-L10-Pol, -L11-Cycle-L12-Pol et -Si$Y^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple -Si$Y^1Y^2Y^3$ est - Si($CH_3$)$_3$),

$R^5$ et $R^6$ représentent chacun indépendamment H, un alkyle, un aryle, un hétéroaryle, un hydroxyle, un amino, un halogéno, un halogénoalkyle tel qu'un trifluorométhyle, un halogénoalkylthio tel que des groupes perhalogénoalkylthio tels qu'un trifluorométhylthiolate -SCF3, -O-C(=O)-CH=$CH_2$, -O-C(=O)-C($CH_3$)=$CH_2$, -L6-Pol, -L7-Cycle, -L8-PEO, -L9-PEO-L10-Pol, ou -L11-Cycle-L12-Pol,

L6, L7, L8, L9, L10, L11 et L12 sont chacun indépendamment des lieurs ayant de 1 à 30 groupes méthylène, facultativement interrompus par un ou plusieurs atomes ou groupes d'atomes choisis dans le groupe constitué de cycles aromatiques, -O-, -CO-, -S-, -CH=CH-, -C=C-, -COO-, -OC(O)-, -CH=N-, -C(O)NH, -N=N-, -NH-CO- et des mélanges de ceux-ci,

Cycle étant un éther cyclique comprenant de 12 à 21 atomes cycliques au moins 4 unités oxyde d'éthylène et facultativement interrompu par un ou plusieurs atomes d'azote,

PEO étant une chaîne comprenant au moins 4 unités oxyde d'éthylène et facultativement interrompue par un ou plusieurs atomes d'azote,

et à condition que

(i) au moins un parmi $R^1$, $R^2$, $R^3$, $R^5$ ou $R^6$ soit -L6-Pol et au moins un parmi $R^1$, $R^2$, $R^3$, $R^5$ ou $R^6$ soit -L7-Cycle ou -L8-PEO

ou

(ii) au moins un parmi $R^1$, $R^2$, $R^3$, $R^5$ ou $R^6$ soit -L9-PEO-L10-Pol, -L11-Cycle-L12-Pol

- le composé d'agrégat métallique est représenté par la formule $X^+{}_d[M_6Q^i{}_8L^a{}_6]^{d-}$ dans lequel $[M_6Q^1{}_8L^a{}_6]^{d-}$ est tel que défini ci-dessus et X est un contre-cation choisi dans le groupe constitué d'un cation de métal alcalin, d'un hydronium, et d'un ammonium, de préférence choisi parmi Cs, Na, K, Li, $H_3O$, $(nC_4H_9)_4N$ et $NH_4$, de manière davantage préférée Cs.

**9.** Matériau selon la revendication 1 ou 2, dans lequel ledit matériau est obtenu par solubilisation de la matrice polymère, du composé organique et du composé d'agrégat métallique dans un solvant et évaporation du solvant, dans lequel :

- le composé organique est représenté par la formule

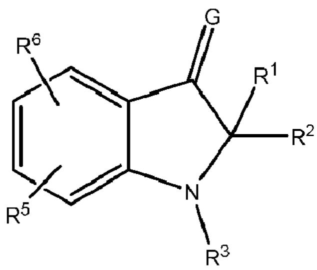

G est tel que défini ci-dessus,

$R^1$ et $R^2$ sont chacun indépendamment sélectionnés parmi un alkyle, un aryle, un alcényle, un alcynyle (tel qu'un propargyle), -O-C(=O)-CH=$CH_2$, -O-C(=O)-C($CH_3$)=$CH_2$,

$R^1$ et $R^2$ peuvent ensemble former un cycloalkyle,

$R^3$ est sélectionné parmi H, un alkyle, un -C=Oalkyle, un C=Oaryle, un -$CO_2$alkyle, un $CO_2$aryle, un -$SO_2$alkyle, un -$SO_2$aryle, un alcényle, un alcynyle (tel qu'un propargyle), -O-C(=O)-CH=$CH_2$, -O-C(=O)-C($CH_3$)=$CH_2$ et -Si$Y^1Y^2Y^3$ dans lequel $Y^1$, $Y^2$ et $Y^3$ sont chacun indépendamment sélectionnés parmi H, un alkyle, un alcoxy, un cycloalkyle, un aryle, un aryloxy et un aralkyle (par exemple -Si$Y^1Y^2Y^3$ est -Si($CH_3$)$_3$),

$R^5$ et $R^6$ représentent chacun indépendamment H, un alkyle, un aryle, un hétéroaryle, un hydroxyle, un

amino, un halogéno, un halogénoalkyle (tel qu'un trifluorométhyle), un halogénoalkylthio (tel que des groupes perhalogénoalkylthio tels qu'un trifluorométhylthiolate $-SCF_3$), $-O-C(=O)-CH=CH_2$, $-O-C(=O)-C(CH_3)=CH_2$,

- le composé d'agrégat métallique est représenté par la formule $X'_d[M_6Q^i_8L^a_6]^{d-}$ dans lequel $[M_6Q^1_8L^a_6]^{d-}$ est tel que défini ci-dessus et X est un contre-cation choisi dans le groupe constitué d'un cation de métal alcalin, d'un hydronium, et d'un ammonium, de préférence choisi parmi Cs, Na, K, Li, $H_3O$, $(nC_4H_9)_4N$ ou $NH_4$, de manière davantage préférée Cs.

**10.** Matériau selon l'une quelconque des revendications 1 à 9, dans lequel la matrice polymère est sélectionnée dans le groupe constitué de polyamides, polycarbonates, polyoléfines telles que polyéthylène, polyimides, polyacrylamides, poly(méth)acrylates tels que polyméthylméthacrylate (PMMA), polymères styréniques tels que polystyrène, polyuréthane, chlorure de polyvinyle, polyester tel que naphtalate de polyéthylène, téréphtalate de polyéthylène, acide polylactique (PLA), poly(acide lactique-co-glycolique) (PLGA), acide polyacrylique, alcool polyvinylique, polyéther tel qu'oxyde de polyéthylène (PEO), polyoxysilane tel que polydiméthylsiloxane (PDMS), ester de cellulose tel qu'acétate phtalate de cellulose (CAP), alkylcellulose telle qu'éthylcellulose et hydroxyalkylcellulose telle qu'éthoxycellulose, de préférence polyméthylméthacrylate (PMMA) ou polydiméthylsiloxane (PDMS) ou acétate phthalate de cellulose (CAP), de manière davantage préférée polyméthylméthacrylate (PMMA).

**11.** Matériau selon l'une quelconque des revendications 1 à 9, dans lequel ladite matrice polymère est sélectionnée dans le groupe constitué de PEO, PEO-uréasil réticulé, PEO-uréthanésil réticulé, polyméthylméthacrylate-méthacrylate de poly(oxyde d'éthylène) (PMMA-PEOMA), polydiméthylsiloxane-PEO (PDMS-PEO), polyvinylpyrrolidone-PEO (PVP-PEO), polyuréthane-PEO (PU-PEO), polystyrène-PEO (PS-PEO), polyéthylène-PEO (PE-PEO) polyester-PEO (PES-PEO), polyamide-PEO, polycaprolactone-PEO, polyacrylamide-PEO, acide polylactique-PEO (PLA-PEO), acide poly(lactique-co-glycolique)-PEO (PLGA-PEO), et mélanges de ceux-ci.

**12.** Matériau selon l'une quelconque des revendications 1 à 11, dans lequel le groupe polymérisable Pol est un groupe comprenant une fonction choisie dans le groupe constitué de : une double liaison carbone-carbone, une triple liaison carbone-carbone, une fonction azoture, une fonction (méth)acrylate, une fonction acrylate, une fonction amine, une fonction carboxylique, une fonction aldéhyde, une fonction hydroxyle, une fonction alcoxy, un atome d'iode, un atome de brome et un atome de chlore ; de manière davantage préférée une fonction choisie dans le groupe constitué d'une fonction acrylate ($-O-C(=O)-CH=CH_2$), d'une fonction méthacrylate ($-OC(=O)-C(CH_3)=CH_2$), d'une double liaison carbone-carbone et d'une triple liaison carbone-carbone.

**13.** Utilisation d'un matériau selon l'une quelconque des revendications 1 à 12 pour l'enregistrement de données, le stockage de données, la détection, la lutte contre la contrefaçon, des applications optoélectroniques ou des applications théranostiques.

**14.** Utilisation d'un matériau selon l'une quelconque des revendications 1 à 12 dans des appareils sélectionnés dans le groupe de dispositifs d'affichage, d'écrans plats à matrice polymère, d'écrans LCD, de cellules photovoltaïques, de détecteurs de température, de capteurs de gaz, de capteurs de pression, de diodes électroluminescentes, de LASERs, de guides d'ondes actifs, et de transistors à effet de champ.

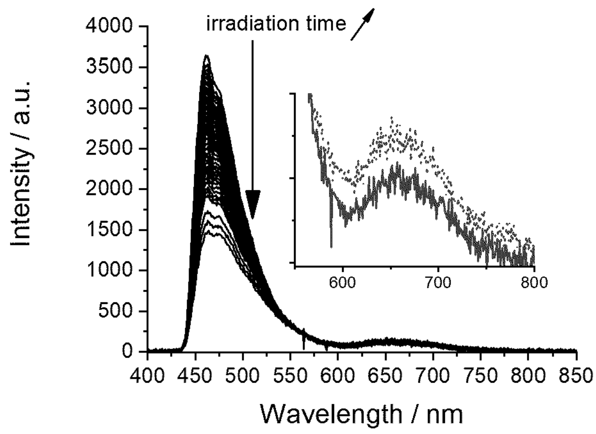


Figure 1

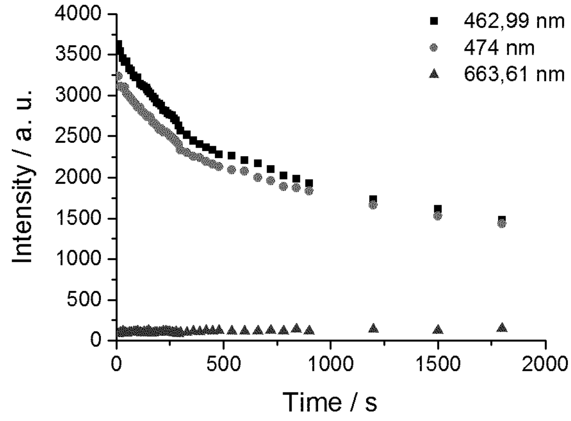


Figure 2

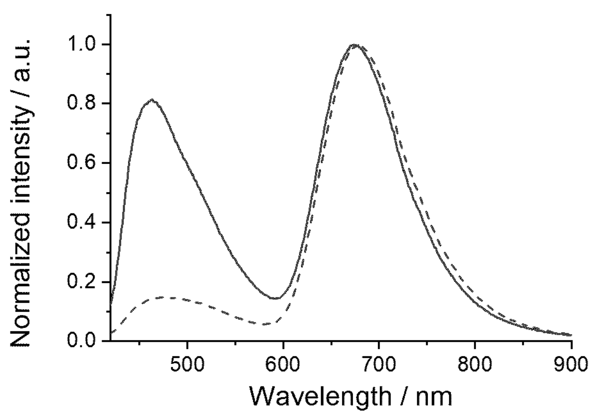


Figure 3

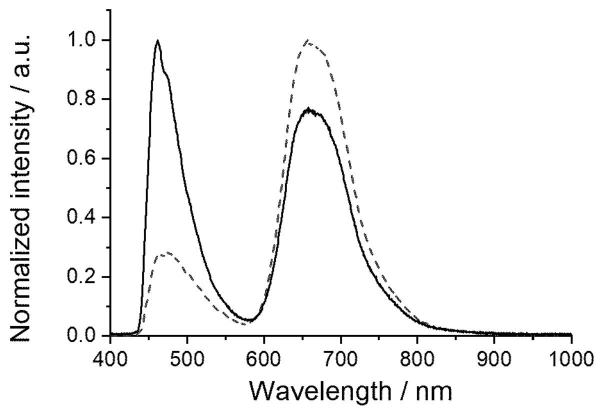


**Figure 4**

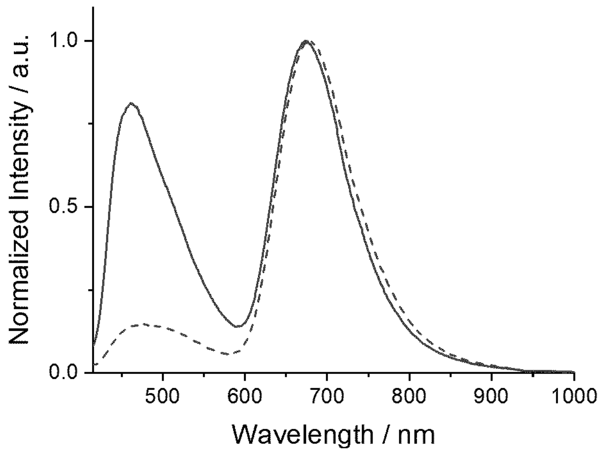


**Figure 5**

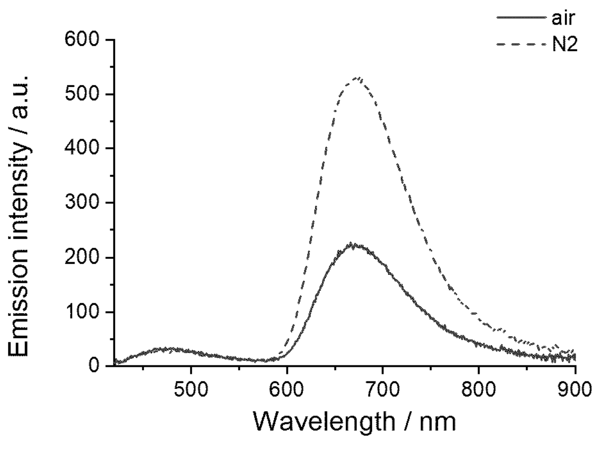


**Figure 6**

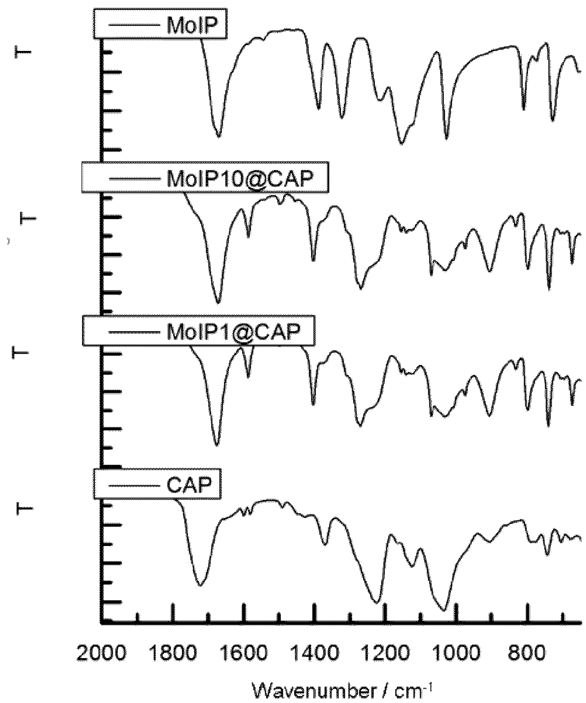


Figure 7

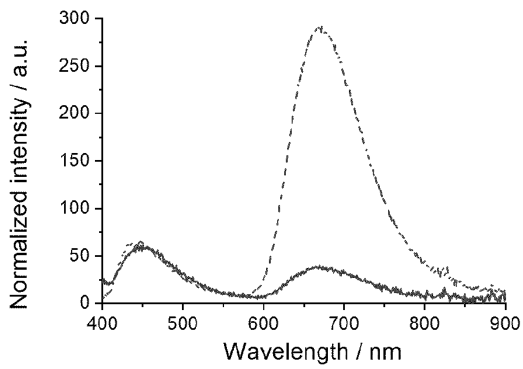


Figure 8

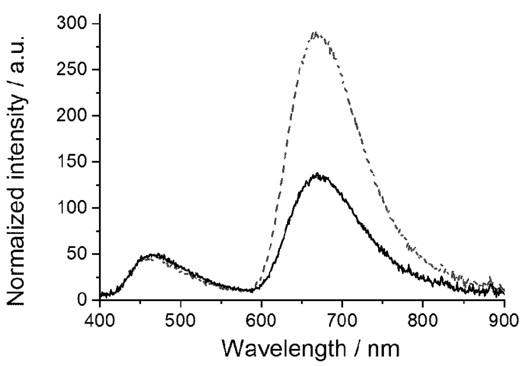


Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011064139 A2
- EP 2754706 A


### Non-patent literature cited in the description


- **F.A. COTTON.** *Inorg. Chem.,* 1964, vol. 3, 1217
- **HORTENSE LAUWICK ; YANG SUN ; HURIYE AKDAS-KILIG ; SYLVIEN DÉRIEN ; MATHIEU ACHARD.** *Chem Eur. J,* 2018, vol. 24, 7964-7969
- **AMELA-CORTES ; Y. MOLARD ; S. PAOFAI ; A. DESERT ; J.-L. DUVAIL ; N. G. NAUMOV ; S. CORDIER.** *Dalton Trans,* 2016, vol. 45, 237-245
- *J. Sol-Gel Sci. Technol.,* 2014, vol. 70, 317
- **M. ROBIN ; N. DUMAIT ; M. AMELA-CORTES ; C. ROILAND ; M. HARNOIS ; E. JACQUES ; H. FOLLIOT ; Y. MOLARD.** *Chem. Eur. J.,* 2018, vol. 24, 4825-4829
- **PRÉVÔT et al.** *J. Mater. Chem. C,* 2015, vol. 3, 5152
- **PRÉVÔT et al.** *Adv. Funct. Mater.,* 2015, vol. 25, 4966-4975
- *Dalton Trans.,* 2016, vol. 45, 237
- **HUMMEL et al.** *Eur. J. Inorg. Chem.,* 2016, 5063-5067
- **LINDLER et al.** *Z. Anorg. Allg. Chem.,* 1923, vol. 130, 209-228
- **SHELDON et al.** *J. Chem. Soc.,* 1960, 1007-1014
- **SCHAFER et al.** *Monatsh. Chem.,* 1971, vol. 102, 1293-1304
- **M. AMELA-CORTES ; Y. MOLARD ; S. PAOFAI ; A. DESERT ; J.-L. DUVAIL ; N. G. NAUMOV ; S. CORDIER.** *Dalton Trans.,* 2016, vol. 45, 237-245
- **JACKSON, J. A. ; TURRO, C. ; NEWSHAM, M. D. ; NOCERA, D. G.** Oxygen quenching of electronically excited hexanuclear molybdenum and tungsten halide clusters. *J. Phys. Chem.,* 1990, vol. 94 (11), 4500-4507
- **M. AMELA-CORTES ; S. PAOFAI ; S. CORDIER ; H. FOLLIOT ; Y. MOLARD.** *Chem. Commun.,* 2015, vol. 51, 8177-8180
- **M. AMELA-CORTES ; Y. MOLARD ; S. PAOFAI ; A. DESERT ; J.-L. DUVAIL ; N. G. NAUMOV ; S. CORDIER.** *Dalton Trans,* 2016, vol. 45, 237-245
- *CHEMICAL ABSTRACTS,* 9004-38-0